(19) Europäisches Patentamt
European Patent Office
Office européen des brevets

(11) **EP 4 404 490 A1**

(12) **EUROPEAN PATENT APPLICATION**
published in accordance with Art. 153(4) EPC

(43) Date of publication:
**24.07.2024 Bulletin 2024/30**

(21) Application number: **22866689.7**

(22) Date of filing: **08.09.2022**

(51) International Patent Classification (IPC):
***H04L 5/00*** *(2006.01)*

(52) Cooperative Patent Classification (CPC):
**H04L 5/00**

(86) International application number:
**PCT/CN2022/117756**

(87) International publication number:
**WO 2023/036226 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.09.2021 CN 202111071208**

(71) Applicant: **Vivo Mobile Communication Co., Ltd.
Dongguan, Guangdong 523863 (CN)**

(72) Inventors:
• **SUN, Bule
Dongguan, Guangdong 523863 (CN)**
• **LIU, Hao
Dongguan, Guangdong 523863 (CN)**
• **YUAN, Pu
Dongguan, Guangdong 523863 (CN)**
• **LIU, Jin
Dongguan, Guangdong 523863 (CN)**
• **SHI, Sihao
Dongguan, Guangdong 523863 (CN)**

(74) Representative: **Murgitroyd & Company
165-169 Scotland Street
Glasgow G5 8PL (GB)**

(54) **SIGNAL TRANSMISSION METHOD AND APPARATUS, DEVICE, AND STORAGE MEDIUM**

(57)    This application discloses a signal transmission method and apparatus, a device, and a storage medium and belongs to the field of communication technologies. The signal transmission method in the embodiments of this application includes: converting, by a first communication device, a first signal into a time-frequency domain to obtain a second signal; and performing, by the first communication device, windowing on the second signal in the time-frequency domain, where the first communication device includes a transmit end of the first signal and/or a receive end of the first signal; in a case that the first communication device is the transmit end of the first signal, the first signal is a signal in a delay-Doppler domain, and the second signal obtained through windowing is used for being converted from the time-frequency domain to a time domain; and in a case that the first communication device is the receive end of the first signal, the first signal is a signal in the time domain, and the second signal obtained through windowing is used for being converted from the time-frequency domain to the delay-Doppler domain.

FIG. 6

**Description**

**CROSS-REFERENCE TO RELATED APPLICATION**

This application claims priority to Chinese Patent Application No. 202111071208.9, entitled "SIGNAL TRANSMISSION METHOD AND APPARATUS, DEVICE, AND STORAGE MEDIUM" and filed on September 13, 2021, which is incorporated herein by reference in its entirety.

**TECHNICAL FIELD**

This application relates to the field of communication technologies, and specifically, to a signal transmission method and apparatus, a device, and a storage medium.

**BACKGROUND**

An orthogonal time-frequency space (Orthogonal Time Frequency Space, OTFS) system is designed based on grid quantization of a delay-Doppler domain. During channel estimation, only estimation values of integer multiples of a delay and a Doppler resolution can be obtained. However, a delay and a Doppler frequency shift of a wireless channel are actually any values and are not necessarily integer multiples of the delay and the Doppler resolution of the OTFS system, that is, a decimal delay or decimal Doppler. In addition, a quantity of points of FFT in the system is not necessarily equal to a quantity of points of SFFT of OTFS, causing diffusion of delay and Doppler. All the decimal delay, the decimal Doppler, the delay diffusion, the Doppler diffusion cause inaccurate channel estimation and further affect signal detection.

In an existing OTFS solution, it is assumed that the delay and the Doppler frequency shift of the channel are exactly integer multiples of the delay and the Doppler domain resolution, or signal detection is directly performed based on a diffused signal estimation value, which inevitably causes a performance loss.

**SUMMARY**

Embodiments of this application provide a signal transmission method and apparatus, a device, and a storage medium, capable of resolving a problem of a performance loss caused by diffusion.

According to a first aspect, a signal transmission method is provided. The method includes:

converting, by a first communication device, a first signal into a time-frequency domain to obtain a second signal; and
performing, by the first communication device, windowing on the second signal in the time-frequency domain, where the first communication device includes a transmit end of the first signal and/or a receive end of the first signal;
in a case that the first communication device is the transmit end of the first signal, the first signal is a signal in a delay-Doppler domain, and the second signal obtained through windowing is used for being converted from the time-frequency domain to time domain; and
in a case that the first communication device is the receive end of the first signal, the first signal is a signal in time domain, and the second signal obtained through windowing is used for being converted from the time-frequency domain to the delay-Doppler domain.

According to a second aspect, a signal transmission method is provided. The method includes:

receiving, by a second communication device in time domain, a third signal sent by a first communication device, where

the third signal is sent in time domain after the first communication device converts a first signal from a delay-Doppler domain to a time-frequency domain to obtain a second signal and performs windowing on the second signal.

According to a third aspect, a signal transmission apparatus is provided. The apparatus includes:

a conversion module, configured to convert a first signal into a time-frequency domain to obtain a second signal; and
a processing module, configured to perform windowing on the second signal in the time-frequency domain, where the first communication device includes a transmit end of the first signal and/or a receive end of the first signal;
in a case that the first communication device is the transmit end of the first signal, the first signal is a signal in a delay-Doppler domain, and the second signal obtained through windowing is used for being converted from the time-frequency domain to time domain; and

in a case that the first communication device is the receive end of the first signal, the first signal is a signal in time domain, and the second signal obtained through windowing is used for being converted from the time-frequency domain to the delay-Doppler domain.

According to a fourth aspect, a signal transmission apparatus is provided. The apparatus includes:

a first receiving module, configured to receive, in time domain, a third signal sent by a first communication device, where

the third signal is sent in time domain after the first communication device converts a first signal from a delay-Doppler domain to a time-frequency domain to obtain a second signal and performs windowing on the second signal.

According to a fifth aspect, a communication device is provided, including a processor, a memory, and programs or instructions stored in the memory and executable on the processor, where when the programs or the instructions are executed by the processor, the steps of the method according to the first aspect are implemented.

According to a sixth aspect, a terminal is provided, including a processor and a communication interface, where the processor is configured to:

convert a first signal into a time-frequency domain to obtain a second signal; and

perform windowing on the second signal in the time-frequency domain, where

the first communication device includes a transmit end of the first signal and/or a receive end of the first signal;

in a case that the first communication device is the transmit end of the first signal, the first signal is a signal in a delay-Doppler domain, and the second signal obtained through windowing is used for being converted from the time-frequency domain to time domain; and

in a case that the first communication device is the receive end of the first signal, the first signal is a signal in time domain, and the second signal obtained through windowing is used for being converted from the time-frequency domain to the delay-Doppler domain.

According to a seventh aspect, a communication device is provided, including a processor, a memory, and programs or instructions stored in the memory and executable on the processor, where when the programs or the instructions are executed by the processor, the steps of the method according to the second aspect are implemented.

According to an eighth aspect, a communication device is provided, including a processor and a communication interface, where the processor is configured to:

receive, in time domain, a third signal sent by a first communication device, where

the third signal is sent in time domain after the first communication device converts a first signal from a delay-Doppler domain to a time-frequency domain to obtain a second signal and performs windowing on the second signal.

According to a ninth aspect, a readable storage medium is provided, storing programs or instructions, where when the programs or the instructions are executed by a processor, the steps of the method according to the first aspect or the steps of the method according to the second aspect are implemented.

According to a tenth aspect, a chip is provided, including a processor and a communication interface, where the communication interface is coupled to the processor, and the processor is configured to run programs or instructions to implement the steps of the method according to the first aspect or the steps of the method according to the second aspect.

According to an eleventh aspect, a computer program/program product, stored in a non-volatile storage medium, where the program/program product is executed by at least one processor to implement the steps of the method according to the first aspect or the steps of the method according to the second aspect.

In the embodiments of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

**BRIEF DESCRIPTION OF THE DRAWINGS**

FIG. 1 is a structural diagram of a wireless communication system to which an embodiment of this application is applicable;

FIG. 2 is a schematic diagram of conversion between a delay-Doppler plane and a time-frequency plane according to an embodiment of this application;

FIG. 3 is a schematic diagram of channel response relationships in different planes according to an embodiment of this application;

FIG. 4 is a schematic diagram of a processing process of a transmit end and a receive end of an OTFS multicarrier system according to an embodiment of this application;

FIG. 5 is a schematic diagram of pilot mapping in a delay-Doppler domain according to an embodiment of this application;

FIG. 6 is a first schematic flowchart of a signal transmission method according to an embodiment of this application;

FIG. 7 is a schematic diagram of a communication process of a transmit end according to an embodiment of this application;

FIG. 8 is a schematic diagram of a communication process of a receive end according to an embodiment of this application;

FIG. 9 is a first schematic diagram of a special mapping manner according to an embodiment of this application;

FIG. 10 is a second schematic diagram of a special mapping manner according to an embodiment of this application;

FIG. 11 is a first schematic diagram of a window matrix according to an embodiment of this application;

FIG. 12 is a second schematic diagram of a window matrix according to an embodiment of this application;

FIG. 13 is a third schematic diagram of a window matrix according to an embodiment of this application;

FIG. 14 is a second schematic flowchart of a signal transmission method according to an embodiment of this application;

FIG. 15 is a first schematic structural diagram of a signal transmission apparatus according to an embodiment of this application;

FIG. 16 is a second schematic structural diagram of a signal transmission apparatus according to an embodiment of this application;

FIG. 17 is a schematic structural diagram of a communication device according to an embodiment of this application;

FIG. 18 is a schematic diagram of a hardware structure of a terminal according to an embodiment of this application; and

FIG. 19 is a schematic structural diagram of a network side device according to an embodiment of this application.

## DETAILED DESCRIPTION

The technical solutions in the embodiments of this application are clearly described below with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

The specification and claims of this application, and terms "first" and "second" are used to distinguish similar objects, but are not used to describe a specific sequence or order. It should be understood that the terminology in such a way are interchangeable in appropriate circumstances, so that the embodiments of this application can be implemented in orders other than the order illustrated or described herein. In addition, the objects distinguished by "first" and "second" are usually of a same type, without limiting a quantity of objects, for example, there may be one or more first objects. In addition, "and/or" in the description and the claims means at least one of the connected objects, and the character "/" in this specification generally indicates an "or" relationship between the associated objects.

It should be noted that the technologies described in the embodiments of this application are not limited to a Long Term Evolution (Long Term Evolution, LTE)/LTE-Advanced (LTE-Advanced, LTE-A) system, and can be further used in other wireless communication systems, such as code division multiple address (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following description describes a New Radio (New Radio, NR) system for exemplary purposes, and uses NR terms in most of the following descriptions, but these technologies are also applicable to applications other than the NR system application, such as a $6^{th}$ generation ($6^{th}$ Generation, 6G) communication system.

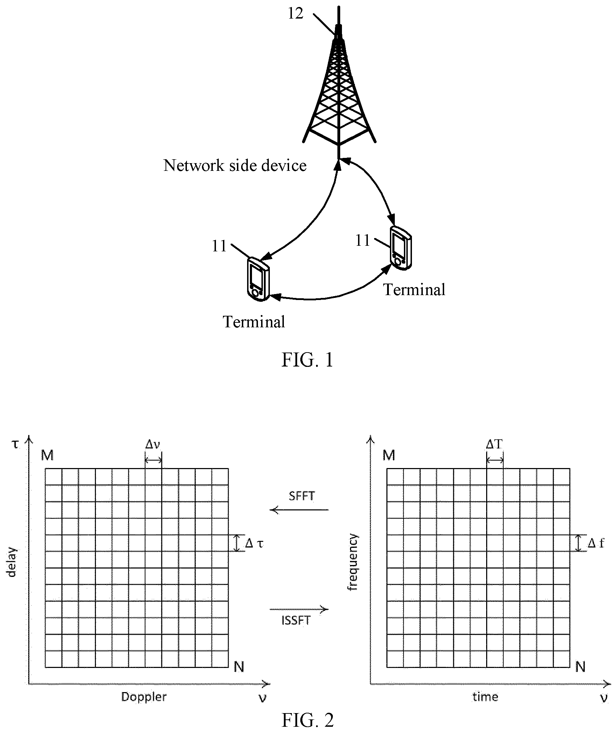

FIG. 1 is a structural diagram of a wireless communication system to which an embodiment of this application is applicable. The wireless communication system includes a terminal 11 and a network side device 12. The terminal 11 may also be referred to as a terminal device or a user terminal (User Equipment, UE). The terminal 11 may be a mobile phone, a tablet computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), a smart household (a home device having a wireless communication function, for example, a refrigerator, a television, a washing machine, or a furniture, and other terminal side devices. The wearable device includes a smartwatch, a smart band, a smart headset, smart glasses, smart jewelry (a smart bracelet, a smart hand chain, a smart ring, a smart necklace, a smart bangle, a smart anklet, and the like), a smart wristband, smart clothing, a game console, or the like. It should be noted that, a specific type of the terminal 11 is not limited in this embodiment of this application. The network side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a Wi-Fi node, a transmitting/receiving point (Transmitting Receiving Point, TRP), or some other suitable term in the field, provided that a same technical effect is achieved. The base station is not limited to a specific technical term. It should be noted that, in this embodiment of this application, only a base station in an NR system is used as an example, but the specific type of the base station is not limited.

The following content is first described.

1. OTFS communication technology.

Features of a delay and Doppler of a channel are essentially determined by a multipath channel. Signals arriving at a receiver through different paths differ in a time of arrival due to different propagation paths. For example, two echoes $s_1$ and $s_2$ arrive at the receiver by passing through distances $d_1$ and $d_2$ respectively, and a time difference between times at which the two echoes arrive at the receiver is $\overline{\Delta t} = \frac{|d_1 - d_2|}{c}$, where c is a speed of light. Because there is the time difference between the echoes $s_1$ and $s_2$, incoherent superposition of the echoes on a receiver side causes jitter of an amplitude of an observed signal, that is, a fading effect. Similarly, Doppler spread of the multipath channel is also caused by a multipath effect.

A Doppler effect is that because a relative speed exists on a transmit end and a receive end, and incident angles of signals that arrive at the receiver through different paths relative to a normal line of an antenna are different, different relative speeds are caused and different Doppler frequency shifts of signals of different paths are also caused. It is assumed that an original frequency of a signal is $f_0$, a relative speed on the transmit end and the receive end is $\Delta v$, and an incident angle of the signal relative to the normal line of the antenna is $\theta$, $\Delta f = \frac{\Delta v}{f} \cos \theta$. Obviously, when the two echoes $s_1$ and $s_2$ arrive at the antenna on the receive end through different paths and have different incident angles $\theta_1$ and $\theta_2$, obtained Doppler frequency shifts $\Delta f_1$ and $\Delta f_2$ are also different.

Based on the foregoing, from the perspective of the receiver end, the signal is a superposition of component signals with different delays and Doppler from different paths and is reflected as a reception signal with fading and a frequency shift relative to an original signal as a whole. Delay-Doppler analysis on a channel is helpful to collect delay-Doppler information of each path to reflect a delay-Doppler response of the channel.

A full name of an OTFS modulation technology is orthogonal time frequency space (Orthogonal Time Frequency Space) modulation. The technology is to logically map information in a data packet with a size being M × N, for example, a QAM (Quadrature Amplitude Modulation) symbol, to a M × N grid point on a two-dimensional delay-Doppler plane, that is, a QAM symbol in the data packet is modulated by using a pulse in each grid point.

Further, by designing a set of orthogonal two-dimensional basis functions, a data set on the M × N delay-Doppler domain plane may be transformed into a N × M time-frequency domain plane. This transformation is mathematically referred to as inverse sympletic Fourier transform (Inverse Sympletic Finite Fourier Transform, ISFFT).

Correspondingly, transformation from a time-frequency domain to a delay-Doppler domain is referred to as sympletic Fourier transform (Sympletic Fourier Transform, SFFT). The physical meaning thereof is that a delay and a Doppler effect of a signal are actually a linear superposition effect of a series of echoes with different time and frequency offsets after the signal passes through a multipath channel. That is, delay-Doppler analysis and time-frequency domain analysis can be obtained through conversion between the ISFFT and the SFFT.

FIG. 2 is a schematic diagram of conversion between a delay-Doppler plane and a time-frequency plane according to an embodiment of this application. As shown in FIG. 2, by using the OTFS technology, a time-varying multipath channel can be changed into a time-invariant (within specific duration) two-dimensional delay-Doppler domain channel, which directly reflects a channel delay-Doppler response feature caused by a geometrical feature of a relative position of a reflector between a transmitter and a receiver in a wireless link. There are the following three advantages:

(a) invariance of a channel coupled state. Because a delay and Doppler of a signal reflect that a direct action of a reflector in a physical channel depends on only a relative speed and a position of the reflector, the delay and the Doppler of the signal may be correspondingly considered as unchanged on a time scale of a wireless frame.

(b) separability of a channel coupled state. In a channel frequency response of a delay-Doppler domain, all diversity paths are reflected as an independent impulse response and are completely separable. A quadrature amplitude modulation (Quadrature Amplitude Modulation, QAM) symbol traverses all the diversity paths.

(c) orthogonality of a channel coupled state. Because a channel impulse response of the delay-Doppler domain is limited in a delay-Doppler domain resource element, there is no IDIs (inter delay/Doppler interferences) of a delay dimension and a Doppler dimension theoretically on a receive end.

Due to the feature, the delay-Doppler domain analysis eliminates a difficulty of tracking a time-varying fading feature in conventional time-frequency domain analysis, and by analyzing a time-invariant delay-Doppler channel, all diversity features of a time-frequency domain channel are extracted, so that the time-frequency domain channel is calculated by using a conversion relationship between the delay-Doppler domain and the time-frequency domain. In an actual system, quantities of delay paths and Doppler frequency shifts of a channel are far less than quantities of time domain responses and frequency domain responses of the channel, and the channel represented by using the delay-Doppler domain is relatively simple. Therefore, by using the OTFS technology, analysis is performed in the delay-Doppler domain, so that encapsulation of a reference signal can be more compact and flexible, which especially helps to support a large antenna array in a large-scale MIMO system.

A core of OTFS modulation is that a QAM symbol defined on the delay-Doppler plane is converted into the time-frequency domain for sending, and then is received by the receive end and is converted into the delay-Doppler domain for processing. Therefore, a wireless channel response analysis method in the delay-Doppler domain may be introduced.

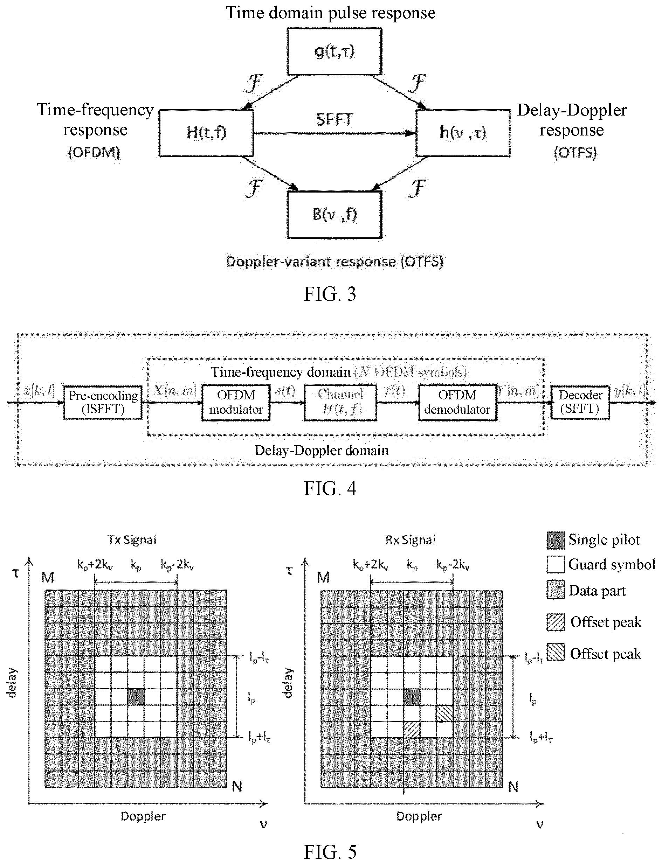

FIG. 3 is a schematic diagram of channel response relationships in different planes according to an embodiment of this application. As shown in FIG. 3, relationships between expressions of a channel response of a signal in different planes when the signal passes through a linear time-varying wireless channel are reflected.

In FIG. 3, a transformation formula of SFFT is:

$$h(\tau,\nu) = \iint H(t,f) e^{-j2\pi(\nu t - f\tau)} d\tau d\nu \tag{1}$$

Correspondingly, a transformation formula of ISSFT is:

$$H(t,f) = \iint h(\tau,\nu) e^{j2\pi(\nu t - f\tau)} d\tau d\nu \tag{2}$$

When the signal passes through the linear time-varying channel, a time domain reception signal is $r(t)$, a corresponding frequency domain reception signal is R(f), and $r(t) = \mathcal{F}^{-1}\{R(f)\}$. $r(t)$ may be represented as the following form:

$$r(t) = s(t) * h(t) = \int g(t,\tau) s(t-\tau) d\tau \tag{3}$$

It can be learned from the relationships in FIG. 3 that

$$g(t,\tau) = \int h(\nu,\tau) e^{j2\pi\nu t} d\nu \tag{4}$$

Formula (4) may be substituted into formula (3) to obtain:

$$r(t) = \iint h(\nu,\tau) s(t-\tau) e^{j2\pi\nu t} d\tau d\nu \tag{5}$$

It can be learned from the relationships shown in FIG. 3, classical Fourier Transform, and formula (5) that

$$
\begin{aligned}
r(t) &= \iint h(v,\tau)\left(\int S(f)e^{j2\pi f(t-\tau)}df\right)e^{j2\pi vt}d\tau dv \\
&= \int\left(\iint h(v,\tau)e^{j2\pi(vt-f\tau)}d\tau dv\right)S(f)e^{j2\pi ft}df \\
&= \int H(t,f)S(f)e^{j2\pi ft}df \\
&= \mathcal{F}^{-1}\{R(f)\}
\end{aligned}
\tag{6}
$$

It can be learned based on the equation (6) that analysis of the OTFS system in the delay-Doppler domain can be implemented by relying on a communication framework established in the time-frequency domain and adding an additional signal processing process on a transmit end and a receive end. In addition, the additional signal processing is formed by only Fourier transform and can be completely implemented by existing hardware without adding a new module.

In the actual system, the OTFS technology can be implemented as a pre-processing module and a post-processing module of a filtered orthogonal frequency division multiplexing (Orthogonal frequency division multiplexing, OFDM) system, so that the OTFS technology has good compatibility with a multicarrier system under an existing communication technology architecture such as an NR technology architecture.

When the OTFS is combined with the multicarrier system, an implementation of the transmit end is as follows: a QAM symbol including to-be-sent information is carried by a waveform of a delay-Doppler plane, and the waveform is converted into a waveform of a time-frequency domain plane in a conventional multicarrier system through two-dimensional inverse sympletic finite Fourier transform (Inverse Sympletic Finite Fourier Transform, ISFFT), and then is converted into a time domain sampling point through symbol-level one-dimensional inverse fast Fourier transform (Inverse Fast Fourier Transform, IFFT) and serial-to-parallel conversion and the time domain sampling point is sent.

FIG. 4 is a schematic diagram of a processing process of a transmit end and a receive end of an OTFS multicarrier system according to an embodiment of this application. As shown in FIG. 4, a receive end of the OTFS system is substantially an inverse process of a transmit end: after being received by a receiver, the time domain sampling point is first converted into the waveform of the time-frequency domain plane through parallel-to-serial conversion and symbol-level one-dimensional fast Fourier transform (Fast Fourier Transform, FFT), then is converted into the waveform of the delay-Doppler domain plane through two-dimensional sympletic finite Fourier transform (Sympletic Finite Fourier Transform, SFFT), and then processing of the receiver is performed on the QAM symbol carried by the waveform of the delay-Doppler domain, where processing includes channel estimation and equalization, demodulation, decoding, and the like.

Advantages of the OTFS modulation are mainly reflected in the following aspects:

(a) The OTFS modulation converts a time-varying fading channel in the time-frequency domain between the transmitter and the receiver into a deterministic fading-free channel in the delay-Doppler domain. In the delay-Doppler domain, each symbol in a set of information symbols sent at one time has a same static channel response and SNR.
(b) The OTFS system parses out the reflector in the physical channel by using a delay-Doppler image and coherently combines energy from different reflection paths by using a receive equalizer, which actually provides a fading-free static channel response. By using the static channel feature, the OTFS system does not need to introduce closed-loop channel adaptation to deal with a fast-changing channel like an OFDM system, thereby improving system robustness and reducing complexity of a system design.

Because a quantity of delay-Doppler states in the delay-Doppler domain is far less than a quantity of time-frequency states in the time-frequency domain, the channel in the OTFS system may be expressed in a very compact form. The channel estimation overheads of the OTFS system are less and more accurate.

Another advantage of the OTFS is to deal with an extreme Doppler channel. Through analysis of a delay-Doppler image by using an appropriate signal processing parameter, the Doppler feature of the channel can be completely presented, which is beneficial for signal analysis and processing in a Doppler-sensitive scenario (for example, high-speed movement and a millimeter wave).

Therefore, a new method may be used for channel estimation in the OTFS system. A transmitter maps a pilot pulse to the delay-Doppler domain, and a receiver estimates a channel response $h(v, \tau)$ of the delay-Doppler domain through analysis of the delay-Doppler image of the pilot, and may further obtain a channel response expression of the time-frequency domain according to the relationships in FIG. 3, thereby facilitating signal analysis and processing.

FIG. 5 is a schematic diagram of pilot mapping in a delay-Doppler domain according to an embodiment of this application. A manner of pilot mapping in the delay-Doppler domain may be shown in FIG. 5. A transmission signal in FIG. 5 is formed by guard symbols (a non-shadowed part) whose area is $(2l_\tau+1)(4k_v+1)$-1 and that surround a single pilot (a small block with a number being 1) located on $(l_p, k_p)$ and a data part (a region other than the guard symbols) of $MN$ - $(2l_\tau+1)(4k_v+1)$. On a receive end, there are two offset peaks (shaded slash parts) in a guard band of delay-Doppler domain grid points, which means that there are two secondary paths with different delay-Doppler in addition to a main path. Amplitude, delay, and Doppler parameters of all the secondary paths are measured to obtain a delay-Doppler domain expression of a channel, that is, $h(v, \tau)$.

Especially, to prevent contamination of a pilot symbol by data on reception signal grid points, resulting in inaccurate channel estimation, an area of the guard symbols should meet the following condition:

$$l_\tau \geq \tau_{\max} M \Delta f, \quad k_v \geq v_{\max} N \Delta T \qquad (7),$$

where

$\tau_{max}$ and $v_{max}$ are respectively a maximum delay and a maximum Doppler frequency shift of all paths of a channel.

The signal transmission method and apparatus, and the device provided in the embodiments of this application are described in detail below with reference to the accompanying drawings by using some embodiments and application scenarios thereof.

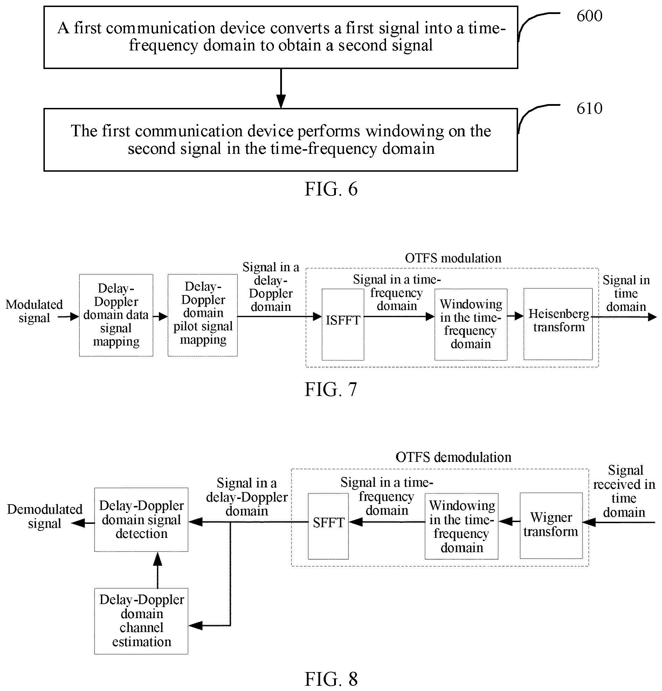

FIG. 6 is a first schematic flowchart of a signal transmission method according to an embodiment of this application. As shown in FIG. 6, the method includes the following steps.

Step 600. A first communication device converts a first signal into a time-frequency domain to obtain a second signal.

Step 610. The first communication device performs windowing on the second signal in the time-frequency domain.

The first communication device includes a transmit end of the first signal and/or a receive end of the first signal;

in a case that the first communication device is the transmit end of the first signal, the first signal is a signal in a delay-Doppler domain, and the second signal obtained through windowing is used for being converted from the time-frequency domain to time domain; and

in a case that the first communication device is the receive end of the first signal, the first signal is a signal in time domain, and the second signal obtained through windowing is used for being converted from the time-frequency domain to the delay-Doppler domain.

Optionally, the first communication device may be a terminal, and a communication peer end may be a network side device. The transmit end of the first signal may be the first communication device, that is, the terminal, and the receive end of the first signal may be the communication peer end, that is, the network side device.

Optionally, the first communication device may be a terminal, and a communication peer end may be a network side device. The receive end of the first signal may be the first communication device, that is, the terminal, and the transmit end of the first signal may be the communication peer end, that is, the network side device.

Optionally, the first communication device may be a network side device, and a communication peer end may be a terminal. The transmit end of the first signal may be the first communication device, that is, the network side device, and the receive end of the first signal may be the communication peer end, that is, the terminal.

Optionally, the first communication device may be a network side device, and a communication peer end may be a terminal. The receive end of the first signal may be the first communication device, that is, the network side device, and the transmit end of the first signal may be the communication peer end, that is, the terminal.

Optionally, the first communication device may be a terminal, and a communication peer end may be another terminal. The transmit end of the first signal may be the first communication device, that is, the terminal, and the receive end of the first signal may be the communication peer end, that is, the another terminal.

Optionally, to overcome a defect of low transmission performance caused by signal diffusion in the prior art, in this embodiment of this application, windowing may be performed in the time-frequency domain at at least one time node of before transmission of the first signal and after transmission of the signal, to reduce side lobes of the signal, thereby reducing diffusion of the signal and improving signal transmission performance.

Optionally, in a transmission process of the first signal, windowing may be performed in the time-frequency domain at only the transmit end of the first signal.

Optionally, in a transmission process of the first signal, windowing may be performed in the time-frequency domain at only the receive end of the first signal.

Optionally, in a transmission process of the first signal, windowing may be performed in the time-frequency domain at both the transmit end and the receive end of the first signal.

Optionally, because the first signal and the second signal essentially include same information content, the transmit end of the first signal is also a transmit end of the second signal, the receive end of the first signal is also a receive end of the second signal, and the transmission process of the first signal may be understood as a transmission process of the same information content included in the first signal and the second signal.

FIG. 7 is a schematic diagram of a communication process of a transmit end according to an embodiment of this application. As shown in FIG. 7, in a case that the first communication device is the transmit end of the first signal, the first signal is a signal mapped by the first communication device to the delay-Doppler domain. The first communication device may convert the first signal (a two-dimensional signal, which may be represented by using a matrix) in the delay-Doppler domain into the second signal (a two-dimensional signal, which may be represented by using a matrix) in the time-frequency domain, then perform windowing (weighted processing) on the second signal, and then convert the second signal into time domain and send the second signal.

Specifically, in a case that the first communication device is the transmit end of the first signal, the signal transmission method may specifically include the following steps a1 to a5.

Step a1. The first communication device may map a data signal of a modulated first signal to a region in which data can be placed in the delay-Doppler domain.

Step a2. The first communication device may map a pilot signal of the first signal to a region in which a pilot can be placed in the delay-Doppler domain.

Step a3. The first communication device may perform inverse sympletic Fourier transform on the first signal in the delay-Doppler domain to obtain the second signal in the time-frequency domain, that is, convert the first signal into the time-frequency domain.

Step a4. The first communication device may perform time-frequency windowing (weighted processing) on the second signal in the time-frequency domain.

Step a5. The first communication device may perform Heisenberg transform (Heisenberg Transform) on the signal obtained through windowing to convert the signal into time domain and send the signal.

FIG. 8 is a schematic diagram of a communication process of a receive end according to an embodiment of this application. As shown in FIG. 8, in a case that the first communication device is the receive end of the first signal, the first communication device may convert the first signal received in time domain into the second signal (a two-dimensional signal, which may be represented by using a matrix) in the time-frequency domain, perform windowing (weighted processing) on the second signal in the time-frequency domain, and then convert the second signal obtained through windowing into the delay-Doppler domain, where the second signal in the delay-Doppler domain is the two-dimensional signal and may be represented by using a matrix.

Specifically, in a case that the first communication device is the receive end of the first signal, the first signal is a signal received by the first communication device in time domain, and the signal transmission method may specifically include the following steps b1 to b5.

Step b1. The first communication device may perform Wigner transform (Wigner Transform) on the first signal received in time domain to obtain the second signal in the time-frequency domain, that is, convert the first signal from time domain to the time-frequency domain.

Step b2. The first communication device may perform time-frequency windowing on the second signal in the time-frequency domain.

Step b3. The first communication device may perform sympletic Fourier transform on the second signal obtained through windowing in the time-frequency domain, and convert the second signal into the delay-Doppler domain, to obtain the second signal in the delay-Doppler domain.

Step b4. The first communication device may find a pilot signal region from the signal in the delay-Doppler domain according to a pilot signal mapping rule of the transmit end of the currently received first signal, and perform channel estimation.

Step b5. The first communication device may find a data signal region from the signal in the delay-Doppler domain according to a data signal mapping rule of the transmit end of the currently received first signal, and perform signal detection.

Optionally, in a case that windowing is performed in the time-frequency domain at only the transmit end, after the second signal obtained through windowing is sent in time domain in step a5, windowing shown in FIG. 8 is not performed at the receive end.

Optionally, in a case that windowing is performed in the time-frequency domain at both the transmit end and the receive end, after the second signal obtained through windowing is sent in time domain in step a5, windowing shown in FIG. 8 may be performed at the receive end.

Optionally, in a case that windowing is performed in the time-frequency domain at only the receive end, the first signal received in step b1 is a signal on which windowing shown in FIG. 7 is not performed at the transmit end.

Optionally, the signal transmission method provided in this embodiment of this application is applicable to transmission of all types of signals.

Optionally, the signal transmission method provided in this embodiment of this application is applicable to an uplink transmission scenario. Optionally, the signal transmission method provided in this embodiment of this application is applicable to a downlink transmission scenario.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

Optionally, the performing, by the first communication device, windowing on the second signal in the time-frequency domain includes:

performing, by the first communication device, windowing on the second signal in the time-frequency domain based on a type of a pilot signal of the second signal in the delay-Doppler domain.

Optionally, the type of the pilot signal of the second signal in the delay-Doppler domain may include at least of the following: a pilot signal used for demodulation; and a pilot signal used for measuring quality of a physical channel.

Optionally, in two different cases that the pilot signal of the second signal in the delay-Doppler domain is the pilot signal used for demodulation and the pilot signal used for measuring quality of a physical channel, windowing may be implemented in a same manner.

Optionally, in two different cases that the pilot signal of the second signal in the delay-Doppler domain is the pilot signal used for demodulation and the pilot signal used for measuring quality of a physical channel, because the two cases have different functions, for example, same windowing may be performed on the pilot signal used for demodulation and the data signal, but same windowing may not necessarily be directly performed on the pilot signal used for measuring quality of a physical channel and the data signal, in the two cases, windowing may also be implemented in different manners.

Therefore, the first communication device may perform windowing on the second signal in the time-frequency domain based on the type of the pilot signal of the second signal in the delay-Doppler domain. In this embodiment of this application, by comprehensively considering a function (that is, a type) of the pilot signal part of the second signal in the delay-Doppler domain, same or different windowing is performed on the second signal, so that the signal transmission method provided in this embodiment of this application is applicable to more scenarios, and signal transmission performance can be effectively improved in more scenarios.

Optionally, the performing, by the first communication device, windowing on the second signal in the time-frequency domain based on a type of a pilot signal of the second signal in the delay-Doppler domain includes:

in a case that the pilot signal is a pilot signal used for demodulation, performing, by the first communication device, windowing on the second signal in the time-frequency domain.

Optionally, if the pilot signal is the pilot signal used for demodulation, the data signal and the pilot signal may be directly converted into the time-frequency domain, and windowing is performed.

Optionally, if the pilot signal is the pilot signal used for demodulation, the pilot signal part and the data signal part of the second signal in the delay-Doppler domain are converted into the time-frequency domain, and then same windowing may be performed, for example, a same window may be added.

Optionally, the performing, by the first communication device, windowing on the second signal in the time-frequency domain based on a type of a pilot signal of the second signal in the delay-Doppler domain includes:

in a case that the pilot signal is a pilot signal used for measuring quality of a physical channel, performing, by the first communication device, windowing on the second signal in a first time-frequency unit in the time-frequency domain, and skipping performing windowing on the second signal in a second time-frequency unit, where

the second signal in the first time-frequency unit is a signal obtained by converting a data signal part of the second signal in the delay-Doppler domain into the time-frequency domain; and the second signal in the second time-frequency unit is a signal obtained by converting a pilot signal part of the second signal in the delay-Doppler domain into the time-frequency domain.

Optionally, a time-frequency unit may be a frame, or may be a slot, or may be any period of time resource or time-frequency resource. This is not limited in this embodiment of this application.

Optionally, that a time-frequency unit is a frame is used as an example. If the pilot signal is the pilot signal used for measuring quality of a physical channel, and when the data signal part and the pilot signal part of the second signal in the delay-Doppler domain are sent in different frames, a frame in which the data signal is located may be converted into the time-frequency domain and windowing is performed, and then is converted into time domain and the data signal is sent. A frame in which the pilot signal is located is converted into the time-frequency domain and then windowing may not be performed, and then is converted into time domain and the pilot signal is sent.

Optionally, that a time-frequency unit is a frame is used as an example. If the pilot signal and the data signal of the second signal in the delay-Doppler domain are sent in two different frames, windowing needs to be performed on the data signal after the data signal is converted into the time-frequency domain, and windowing may not be performed on the pilot signal after the pilot signal part is converted into the time-frequency domain.

Optionally, that a time-frequency unit is a frame is used as an example. If the pilot signal is the pilot signal used for measuring quality of a physical channel, and when the data signal part and the pilot signal part of the second signal in the delay-Doppler domain are sent in different frames, a frame in which the data signal is located may be converted into the time-frequency domain and windowing is performed, and then is converted into time domain and the data signal is sent. In a case that a frame in which the pilot signal is located is converted into the time-frequency domain and then windowing is not performed, and then is converted into time domain and the pilot signal is sent, if the first communication device is the transmit end, windowing may be performed at only the transmit end of the first signal, and additional window removal does not need to be performed at the receive end of the first signal.

Optionally, the performing, by the first communication device, windowing on the second signal in the time-frequency domain based on a type of a pilot signal of the second signal in the delay-Doppler domain includes:

in a case that the pilot signal is a pilot signal used for measuring quality of a physical channel, performing, by the first communication device, windowing on the second signal in the time-frequency domain.

Optionally, if the pilot signal is the pilot signal used for measuring quality of a physical channel, and when the data signal and the pilot signal are sent in a same time-frequency unit, the data signal and the pilot signal of the second signal in the delay-Doppler domain may be directly converted into the time-frequency domain and then windowing is performed.

Optionally, if the pilot signal is the pilot signal used for measuring quality of a physical channel, and when the data signal and the pilot signal are not sent in a same time-frequency unit, the data signal and the pilot signal of the second signal in the delay-Doppler domain may be directly converted into the time-frequency domain and then windowing is performed. Optionally, that a time-frequency unit is frame is used as an example. If the pilot signal is the pilot signal used for measuring quality of a physical channel, and when the data signal and the pilot signal are sent in a same frame, the data signal and the pilot signal of the second signal in the delay-Doppler domain may be directly converted into the time-frequency domain and then windowing is performed.

Optionally, that a time-frequency unit is frame is used as an example. If the pilot signal is the pilot signal used for measuring quality of a physical channel, and when the data signal and the pilot signal are not sent in a same frame, the data signal and the pilot signal of the second signal in the delay-Doppler domain may be directly converted into the time-frequency domain and then windowing is performed.

Optionally, if the pilot signal is the pilot signal used for measuring quality of a physical channel, the pilot signal and the data signal of the second signal in the delay-Doppler domain may be converted into the time-frequency domain and then same windowing is performed, for example, a same window may be added.

Optionally, in a case that the pilot signal is the pilot signal used for measuring quality of a physical channel, and the data signal and the pilot signal of the second signal in the delay-Doppler domain are directly converted into the time-frequency domain and then windowing is performed, if the first communication device is the transmit end of the first signal, the receive end of the first signal may remove an impact of the windowing on the pilot signal by using an algorithm.

Optionally, in a case that a data signal part and a pilot signal part of the second signal in the delay-Doppler domain are transmitted in a same time-frequency unit, a mapping manner of the second signal in the delay-Doppler domain is a special mapping manner.

Optionally, in a case that the data signal part and the pilot signal part of the second signal in the delay-Doppler domain are transmitted in a same frame, the mapping manner of the second signal in the delay-Doppler domain is the special mapping manner.

Optionally, if the pilot signal is the pilot signal used for measuring quality of a physical channel, and when the data signal part and the pilot signal part of the second signal in the delay-Doppler domain are sent in a same frame, special mapping may be first performed in the special mapping manner in the delay-Doppler domain, then the data signal and the pilot signal are converted into the time-frequency domain, and windowing is performed.

Optionally, if the pilot signal is the pilot signal used for measuring quality of a physical channel, and when the data signal and the pilot signal are sent in a same frame, special resource mapping is performed in the delay-Doppler domain, then the data signal and the pilot signal are converted into the time-frequency domain, and windowing is performed, so that windowing can be successfully performed on only the data signal part and windowing is not successfully performed on the pilot signal part.

In this case, if the first communication device is the transmit end of the first signal, windowing may be performed at only the transmit end, and additional window removal does not need to be performed at the receive end of the first signal.

Optionally, the special mapping manner includes skipping placing a data signal and the pilot signal at a first grid position in the delay-Doppler domain.

Optionally, in a case that the mapping manner of the second signal in the delay-Doppler domain is the special mapping manner, the data signal and the pilot signal may not be placed at the first grid position in the delay-Doppler domain.

The first grid position may be preset.

Optionally, the special mapping manner is special resource mapping, that is, a specific grid position (the first grid position) in the delay-Doppler domain may be left blank without placing data.

Optionally, the first grid position includes at least one of the following:

in the delay-Doppler domain, at least one grid position whose delay subscript is the same as a delay subscript of the pilot signal other than a grid position at which the pilot signal has been placed; and

in the delay-Doppler domain, at least one grid position whose Doppler subscript is the same as a Doppler subscript of the pilot signal other than the grid position at which the pilot signal has been placed.

Optionally, in the delay-Doppler domain, the at least one grid position whose delay subscript is the same as the delay subscript of the pilot signal other than the grid position at which the pilot signal has been placed may be left blank without placing data.

Optionally, in the delay-Doppler domain, the at least one grid position whose Doppler subscript is the same as the Doppler subscript of the pilot signal other than the grid position at which the pilot signal has been placed may be left blank without placing data.

Optionally, in the delay-Doppler domain, the at least one grid position whose delay subscript is the same as the delay subscript of the pilot signal and the at least one grid position whose Doppler subscript is the same as the Doppler sub script of the pilot signal other than the grid position at which the pilot signal has been placed may be left blank without placing data.

It is assumed that a grid position of a pilot in the delay-Doppler domain is (c, d), where c represents a subscript in a delay direction, and d represents a subscript in a Doppler direction. The first grid position is at least one of the following c1 and c2.

c1: at least one grid position in other grid positions other than the grid position at which the pilot has been placed in all grids whose delay subscripts are c in the delay-Doppler domain.

c2: at least one grid position in other grid positions other than the grid position at which the pilot has been placed in all grids whose Doppler subscripts are d in the delay-Doppler domain.

Optionally, the first grid position includes at least one of the following:

in the delay-Doppler domain, all grid positions whose delay subscripts are the same as a delay subscript of the pilot signal except a grid position at which the pilot signal has been placed; and

in the delay-Doppler domain, all grid positions whose Doppler subscripts are the same as a Doppler subscript of the pilot signal except a grid position at which the pilot signal has been placed.

Optionally, in the delay-Doppler domain, all the grid positions whose delay subscripts are the same as the delay subscript of the pilot signal except the grid position at which the pilot signal has been placed may be left blank without placing data.

Optionally, in the delay-Doppler domain, all the grid positions whose Doppler subscripts are the same as the Doppler subscript of the pilot signal except the grid position at which the pilot signal has been placed may be left blank without placing data.

Optionally, in the delay-Doppler domain, all the grid positions whose Doppler subscripts are the same as the Doppler subscript of the pilot signal and all the grid positions whose delay subscripts are the same as the delay subscript of the pilot signal except the grid position at which the pilot signal has been placed may be left blank without placing data.

It is assumed that a grid position of a pilot in the delay-Doppler domain is (c, d), where c represents a subscript in a delay direction, and d represents a subscript in a Doppler direction. The first grid position is at least one of the following d1 and d2.

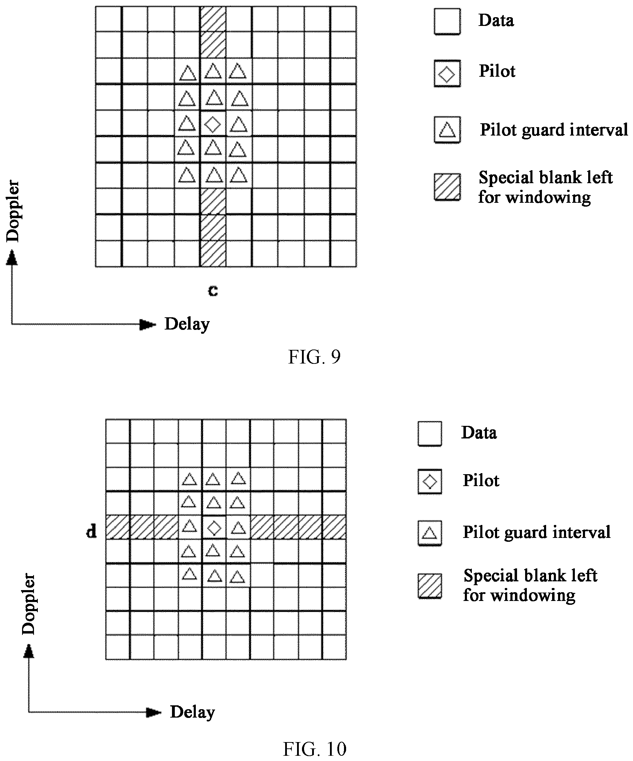

d1: at least one grid position in other grid positions other than the grid position at which the pilot has been placed in all grids whose delay subscripts are c in the delay-Doppler domain. FIG. 9 is a first schematic diagram of a special mapping manner according to an embodiment of this application. As shown in FIG. 9, a grid position of a slash shadow is a first implementation of the special mapping manner, that is, a special blank is left for windowing.

d2: at least one grid position in other grid positions other than the grid position at which the pilot has been placed in all grids whose Doppler subscripts are d in the delay-Doppler domain. FIG. 10 is a second schematic diagram of a special mapping manner according to an embodiment of this application. As shown in FIG. 10, a grid position of a slash shadow is a second implementation the special mapping manner, that is, a special blank is left for windowing.

Optionally, the performing, by the first communication device, windowing on the second signal in the time-frequency domain includes:

performing, by the first communication device, two-dimensional windowing on the second signal in the time-frequency domain.

Optionally, that windowing (weighted processing) is performed in the time-frequency domain may indicate that two-dimensional windowing is performed in the time-frequency domain, where the second signal may be represented by using a two-dimensional matrix.

Optionally, the performing, by the first communication device, two-dimensional windowing on the second signal in the time-frequency domain includes:

performing, by the first communication device, a point multiplication operation on the second signal and a window matrix in the time-frequency domain, where a dimension of the window matrix is the same as a dimension of the second signal.

Specifically, point multiplication may be performed on the second signal (a two-dimensional signal, which may be represented by using a matrix) that is converted into the time-frequency domain and the window matrix that has a same dimension as the second signal.

It is assumed that a signal in the time-frequency domain is X, a dimension of the signal is M rows and N columns, where M represents a quantity of points in a frequency direction, and N represents a quantity of points in a time direction, a window matrix is W, and a dimension of the window matrix is also M rows and N columns, the signal in the time-frequency domain obtained through windowing is represented as $\hat{X}$ , and an expression of the signal obtained through windowing may be $\hat{X}=X\odot W$ , where $\odot$ represents a matrix point multiplication operation, which is also referred to as symbol-wise multiplication.

Optionally, when windowing is performed in the time-frequency domain at both the transmit end and the receive end of the first signal, window matrices used for twice windowing may be the same or may be different.

Optionally, the window matrix is determined based on a window function.

Optionally, the window matrix used for windowing may be determined based on some existing or preset window functions or window functions indicated by the communication peer end or indicated by a high layer.

Optionally, a manner of constructing the window matrix by using the window function may be specified in a protocol or preset or indicated by the communication peer end or indicated by a high layer.

Optionally, at least one row in all rows of the window matrix includes a target row vector in a time direction, and the target row vector in the time direction is determined based on the window function.

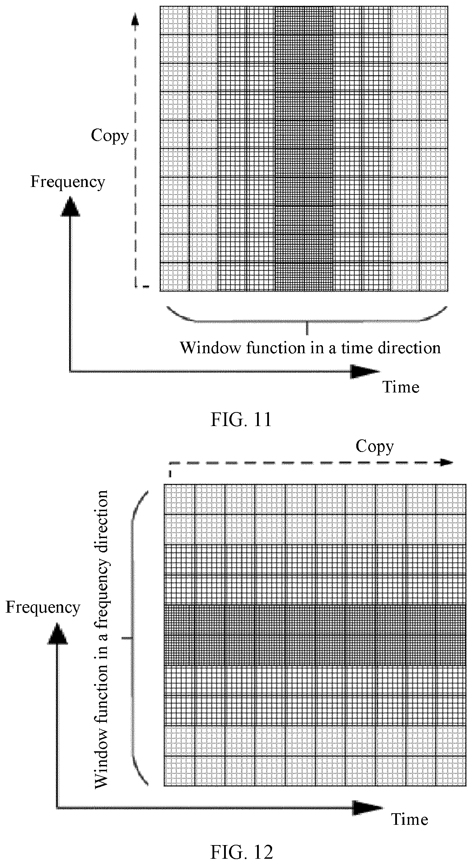

Specifically, it is assumed that the second signal in the time-frequency domain is X, a dimension of the second signal is M rows and N columns, where M represents a quantity of points in a frequency direction, and N represents a quantity of points in a time direction, a window matrix is W, and a dimension of the window matrix is also M rows and N columns, the second signal in the time-frequency domain obtained through windowing is represented as $\hat{X}$ , and an expression of the second signal obtained through windowing is $\hat{X}=X\odot W$ . FIG. 11 is a first schematic diagram of a window matrix according to an embodiment of this application. As shown in FIG. 11, the window matrix may be a matrix obtained by copying a window function in a time direction in a frequency direction. It is assumed that the window function in the time direction is $W_T$ , and a dimension of the window function is one row and N columns, that is, a row vector. In

$$W = \begin{bmatrix} W_T \\ W_{a1} \\ \vdots \\ W_{an} \\ W_T \\ \vdots \\ W_T \end{bmatrix}$$

this case, at least one row of the window matrix is $W_T$ , for example, , where $W_{a1}$, ..., and $W_{an}$ may be any other vectors of one row and N columns.

Optionally, at least one column in all columns of the window matrix includes a target column vector in a time direction, and the target column vector in the time direction is determined based on the window function.

Specifically, it is assumed that the second signal in the time-frequency domain is X, a dimension of the second signal is N rows and M columns, and W is a matrix of N rows and M columns, the second signal in the time-frequency domain obtained through windowing is represented as $\hat{X}$ , and an expression of the second signal obtained through windowing is $\hat{X}=X\odot W$ . $W_T$ is a column vector of N rows and one column, and $W_F$ is a row vector of one row and M columns. In this case, at least one column of the window matrix may be $W_T$ , for example, $W = [W_{b1}\ W_T\ \cdots\ W_T W_{b2}\ W_T$

$\cdots W_T W_{b3} \ W_T \cdots \ W_T]$, where $W_{b1}$, $W_{b2}$, and $W_{b3}$ may be any other vectors of N rows and one column.

Optionally, each row of the window matrix is a target row vector in a time direction, and the target row vector in the time direction is determined based on the window function.

Specifically, it is assumed that a signal in the time-frequency domain is X, a dimension of the signal is M rows and N columns, where M represents a quantity of points in a frequency direction, and N represents a quantity of points in a time direction, a window matrix is W, and a dimension of the window matrix is also M rows and N columns, the second signal in the time-frequency domain obtained through windowing is represented as $\hat{X}$, and an expression of the second signal obtained through windowing is $\hat{X} = X \odot w$. The window matrix may be the matrix obtained by copying the window function in the time direction in the frequency direction. It is assumed that the window function in the time direction is $W_T$, and a dimension of the window function is one row and N columns, that is, a row vector. In this case, each row of the window matrix may be $W_T$, which is represented as:

$$W = \begin{bmatrix} W_T \\ W_T \\ \vdots \\ W_T \end{bmatrix}.$$

Optionally, each column of the window matrix is a target column vector in a time direction, and the target column vector in the time direction is determined based on the window function.

Specifically, it is assumed that the second signal in the time-frequency domain is X, a dimension of the second signal is N rows and M columns, and W is a matrix of N rows and M columns, the second signal in the time-frequency domain obtained through windowing is represented as $\hat{X}$, and an expression of the second signal obtained through windowing is $\hat{X} = X \odot w$. $W_T$ is a column vector of N rows and one column, and $W_F$ is a row vector of one row and M columns. In this case, each column of the window matrix may be $W_T$, which is represented as $W = [W_T \ W_T \cdots \ W_T]$.

Optionally, at least one column in all columns of the window matrix includes a target column vector in a frequency direction, and the target column vector in the frequency direction is determined based on the window function.

Specifically, it is assumed that a signal in the time-frequency domain is X, a dimension of the signal is M rows and N columns, where M represents a quantity of points in a frequency direction, and N represents a quantity of points in a time direction, a window matrix is W, and a dimension of the window matrix is also M rows and N columns, the second signal in the time-frequency domain obtained through windowing is represented as $\hat{X}$, and an expression of the second signal obtained through windowing is $\hat{X} = X \odot w$. FIG. 12 is a second schematic diagram of a window matrix according to an embodiment of this application. As shown in FIG. 12, the window matrix may be a matrix obtained by copying a window function in a frequency direction in a time direction. It is assumed that the window function in the frequency direction is $W_F$, and a dimension of the window function is M rows and one column, that is, a column vector. In this case, at least one column of the window matrix is $W_F$, for example,

$$W = \begin{bmatrix} W_F & W_{c1} & \cdots & W_{cm} W_F & W_{c(m+1)} & \cdots & W_{cn} W_F & W_F & \cdots & W_F \end{bmatrix},$$

where

$W_{c1}$, .., and $W_{cm}$, and $W_{c(m+1)}$, ..., and $W_{cn}$ are all any other vectors of M rows and one column.

Optionally, at least one row in all rows of the window matrix includes a target row vector in a frequency direction, and the target row vector in the frequency direction is determined based on the window function.

Specifically, it is assumed that the second signal in the time-frequency domain is X, a dimension of the second signal is N rows and M columns, and W is a matrix of N rows and M columns, the second signal in the time-frequency domain obtained through windowing is represented as $\hat{X}$, and an expression of the second signal obtained through windowing is $\hat{X} = X \odot w$. $W_T$ is a column vector of N rows and one column (in the time direction), and $W_F$ is a row vector of one row and M columns (in the frequency direction). In this case, at least one row of the window matrix may be $W_F$,

$$W = \begin{bmatrix} W_{d1} \\ W_{d2} \\ W_F \\ \vdots \\ W_F \\ \vdots \\ W_F \end{bmatrix}$$

for example, $\quad$ , where $W_{O4}$ is any other row vector of one row and N columns.

Optionally, each column of the window matrix is a target column vector in a frequency direction, and the target column vector in the frequency direction is determined based on the window function.

Specifically, it is assumed that a signal in the time-frequency domain is X, a dimension of the signal is M rows and N columns, where M represents a quantity of points in a frequency direction, and N represents a quantity of points in a time direction, a window matrix is W, and a dimension of the window matrix is also M rows and N columns, the second signal in the time-frequency domain obtained through windowing is represented as $\hat{X}$, and an expression of the second signal obtained through windowing is $\hat{X}=X \odot w$. The window matrix may be the matrix obtained by copying the window function in the frequency direction in the time direction. It is assumed that the window function in the frequency direction is $W_F$, and a dimension of the window function is M rows and one column, that is, a column vector. In this case, each column of the window matrix may be $W_F$, which is represented as $W = [W_F \ W_F \cdots W_F]$.

Optionally, each row of the window matrix is a target row vector in a frequency direction, and the target row vector in the frequency direction is determined based on the window function.

Specifically, it is assumed that the second signal in the time-frequency domain is X, a dimension of the second signal is N rows and M columns, and W is a matrix of N rows and M columns, the second signal in the time-frequency domain obtained through windowing is represented as $\hat{X}$, and an expression of the second signal obtained through windowing is $\hat{X}=X \odot w$. $W_T$ is a column vector of N rows and one column, and $W_F$ is a row vector of one row and M

$$W = \begin{bmatrix} W_F \\ W_F \\ \vdots \\ W_F \end{bmatrix}$$

columns. In this case, each row of the window matrix may be $W_F$, which is represented as $\quad$.

Optionally, the window function includes a row vector in a time direction and a column vector in a frequency direction; and
the window matrix is determined based on joint construction of the row vector in the time direction and the column vector in the frequency direction.

Specifically, it is assumed that a signal in the time-frequency domain is X, a dimension of the signal is M rows and N columns, where M represents a quantity of points in a frequency direction, and N represents a quantity of points in a time direction, a window matrix is W, and a dimension of the window matrix is also M rows and N columns, the second signal in the time-frequency domain obtained through windowing is represented as $\hat{X}$, and an expression of the second signal obtained through windowing is $\hat{X}=X \odot w$. The window matrix may be a matrix jointly constructed by using the window function (the column vector) in the frequency direction and the window function (the row vector) in the time direction, that is, $W=f(W_F, W_T)$, where $f(\ )$ represents a construction method.

For example, the window matrix is obtained by performing a matrix multiplication operation on the window function (the column vector) in the frequency direction and the window function (the row vector) in the time direction, and is represented as $W=W_F \cdot W_T$, where $\cdot$ represents the matrix multiplication operation.

Optionally, the window matrix is obtained by performing a matrix multiplication operation on the column vector in the frequency direction and the row vector in the time direction.

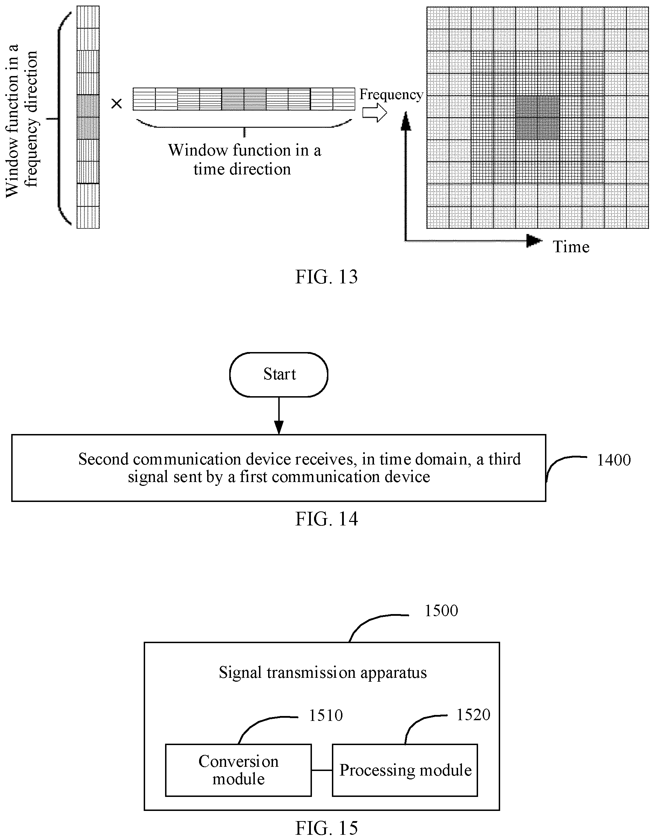

Specifically, it is assumed that a signal in the time-frequency domain is X, a dimension of the signal is M rows and N columns, where M represents a quantity of points in a frequency direction, and N represents a quantity of points in a time direction, a window matrix is W, and a dimension of the window matrix is also M rows and N columns, the second signal in the time-frequency domain obtained through windowing is represented as $\hat{X}$, and an expression of the second signal obtained through windowing is $\hat{X}=X \odot W$. FIG. 13 is a third schematic diagram of a window matrix according to an embodiment of this application. As shown in FIG. 13, the window matrix may be a matrix obtained by performing a matrix multiplication operation on a window function (a column vector) in a frequency direction and a window function (a row vector) in a time direction, that is, $W=W_F \cdot W_T$, where $\cdot$ represents the matrix multiplication operation.

Optionally, the window function includes a column vector in a time direction and a row vector in a frequency direction; and

the window matrix is determined based on joint construction of the column vector in the time direction and the row vector in the frequency direction.

Specifically, it is assumed that the second signal in the time-frequency domain is X, a dimension of the second signal is N rows and M columns, and W is a matrix of N rows and M columns, the second signal in the time-frequency domain obtained through windowing is represented as $\hat{X}$, and an expression of the second signal obtained through windowing is $\hat{X}=X \odot w$. $W_T$ is a column vector of N rows and one column, and $W_F$ is a row vector of one row and M columns.

In this case, the window matrix may be a matrix jointly constructed by using the window function (the column vector) in the time direction and the window function (the row vector) in the frequency direction, that is, $W=f(W_T, W_F)$, where $f(\ )$ represents a construction method, for example, $W=W_T \cdot W_F$.

Optionally, the window matrix is obtained by performing a matrix multiplication operation on the column vector in the time direction and the row vector in the frequency direction.

Specifically, it is assumed that the second signal in the time-frequency domain is X, a dimension of the second signal is N rows and M columns, and W is a matrix of N rows and M columns, the second signal in the time-frequency domain obtained through windowing is represented as $\hat{X}$, and an expression of the second signal obtained through windowing is $\hat{X}=X \odot W$. $W_T$ is a column vector of N rows and one column, and $W_F$ is a row vector of one row and M columns. In this case, the window matrix may be a matrix obtained by performing matrix multiplication on the window function (the column vector) in the time direction and the window function (the row vector) in the frequency direction, that is, $W=W_T \cdot W_F$.

In this embodiment of this application, the window matrix is constructed by using the window function in the time direction, and windowing in the time direction is implemented, thereby effectively overcoming diffusion of the signal, and especially effectively overcoming diffusion of the signal in a Doppler direction.

In this embodiment of this application, the window matrix is constructed by using the window function in the time direction, and windowing in the time direction is implemented, thereby effectively overcoming diffusion of the signal, and especially overcoming diffusion of the signal in a Doppler direction.

In this embodiment of this application, the window matrix is constructed by using the window function in the Doppler direction, and windowing in the Doppler direction is implemented, thereby effectively overcoming diffusion of the signal, and especially effectively overcoming diffusion of the signal in the time direction.

It should be noted that, in each embodiment of this application, the time direction is a delay domain direction in the delay-Doppler domain, and the Doppler direction is a Doppler domain direction in the delay-Doppler domain.

Optionally, the window function is determined based on at least one of the following:

a rectangle window, a Gaussian window, a confined Gaussian window, an approximate confined Gaussian window, a Hamming Hamming window, Hanning Hann window, a Bartlett Bartlett window, a triangular window, a Bartlett-Hanning Bartlett-Hann window, a Blackman Blackman window, a Kaiser Kaiser window, a Nuttall Nuttall window, a Blackman-Nuttall Blackman-Nuttall window, a Blackman-Harris Blackman-Harris window, a flat top window, a Basel window, an exponential sine window, an exponential cosine window, and a Dolph-Chebyshev window.

Optionally, one window function may be selected from the following window functions, or some window functions may be selected from the following window functions, and then combination window (the combination may be multiplication, addition, weighted addition, or another manner) is performed, to obtain a sum of the window functions:

a rectangle window, a Gaussian window, a confined Gaussian window, an approximate confined Gaussian window, a Hamming Hamming window, Hanning Hann window, a Bartlett Bartlett window, a triangular window, a Bartlett-Hanning Bartlett-Hann window, a Blackman Blackman window, a Kaiser Kaiser window, a Nuttall Nuttall window, a Blackman-Nuttall Blackman-Nuttall window, a Blackman-Harris Blackman-Harris window, a flat top window, a Basel window, an exponential sine window, an exponential cosine window, a Dolph-Chebyshev window, and the like.

Optionally, parameter information of the window function is predefined in a protocol or preset, and the parameter information is used for at least one of the following:

determining the window function;
determining the window matrix based on the window function; and
determining the window matrix.

Optionally, the parameter information of the window function may be predefined in a protocol or preset or indicated by the communication peer end or indicated by a high layer, the window function used for constructing the window matrix is determined based on the parameter information, and a manner of constructing the window matrix is determined based on the window function.

Optionally, the parameter information of the window function may be predefined in a protocol or preset or indicated by the communication peer end or indicated by a high layer, the window function used for constructing the window matrix is determined based on the parameter information, and a manner of constructing the window matrix determined based on the window function may be preset or learned in any other possible manner. This is not limited in this embodiment of this application.

Optionally, the parameter information of the window function may be predefined in a protocol or preset or indicated by the communication peer end or indicated by a high layer, a manner of determining the window matrix based on the window function is determined based on the parameter information, and a specifically used window function may be preset or learned in any other possible manner. This is not limited in this embodiment of this application.

Optionally, the parameter information of the window function may be predefined in a protocol or preset or indicated by the communication peer end or indicated by a high layer, the window matrix is directly determined based on the parameter information, and the window function may also be learned while the window matrix is directly learned based on the parameter information, or a construction manner of the window matrix is determined based on the window function, or the window function is learned and a construction manner of the window matrix is determined based on the window function. This is not limited in this embodiment of this application.

Optionally, the method further includes:
sending, by the first communication device, first signaling to a communication peer end, where the first signaling is used for indicating the parameter information of the window function.

Optionally, the first communication device may send the first signaling to the communication peer end to indicate the parameter information of the window function to the communication peer end.

Optionally, after receiving the first signaling, the communication peer end may learn, based on the first signaling, the window matrix used for windowing and may perform a corresponding operation, for example, windowing or additional window removal.

Optionally, the first signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

Optionally, the first signaling may include any one or a combination of a plurality of the following:

radio resource control (RRC) signaling;
layer 1 signaling of a physical downlink control channel (PDCCH);
information about a physical downlink shared channel (PDSCH);
signaling of a media access control control element (MAC);
a system information block (SIB);
layer 1 signaling of a physical uplink control channel (PUCCH);
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel (PUSCH);
Xn interface signaling;
PC5 interface signaling; and

Sidelink interface signaling.

Optionally, the type of the pilot signal is predefined in a protocol or preset.

Optionally, the type of the pilot signal of the second signal in the delay-Doppler domain may include at least of the following: a pilot signal used for demodulation; and a pilot signal used for measuring quality of a physical channel.

Optionally, the type of the pilot signal (that is, the pilot signal used for demodulation or the pilot signal used for measuring quality of a physical channel) may be predefined in a protocol or preset. Before a pilot is actually sent, the transmit end indicates the pilot to the receive end or the first communication device indicates the pilot to the communication peer end.

Optionally, the method further includes:

sending, by the first communication device, second signaling to a communication peer end, where the second signaling is used for indicating the type of the pilot signal.

Optionally, the first communication device may send the second signaling to the communication peer end to indicate the type of the pilot signal to the communication peer end.

Optionally, after receiving the second signaling, the communication peer end may learn, based on the second signaling, the type of the pilot signal and may perform a corresponding operation.

Optionally, the first signaling and the second signaling may be two signaling that are sent simultaneously or two signaling that are not sent simultaneously.

Optionally, the first signaling and the second signaling may be same signaling.

Optionally, the second signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

Optionally, the second signaling may include any one or a combination of a plurality of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

FIG. 14 is a second schematic flowchart of a signal transmission method according to an embodiment of this application. As shown in FIG. 14, the method includes the following steps.

Step 1400. A second communication device receives, in time domain, a third signal sent by a first communication device, where

the third signal is sent in time domain after the first communication device converts a first signal from a delay-Doppler domain to a time-frequency domain to obtain a second signal and performs windowing on the second signal.

Optionally, the second communication device may receive the third signal sent by the first communication device. In this case, the first communication device is a transmit end of the first signal. Before the first communication device sends the third signal in time domain, the first communication device first converts the first signal from the delay-Doppler domain to the time-frequency domain to obtain the second signal, performs windowing on the second signal, and converts the second signal into the third signal in time domain and then sends the third signal.

Optionally, the first communication device may be a terminal, and a communication peer end (that is, the second communication device) may be a network side device. The transmit end of the first signal may be the first communication device, that is, the terminal, and the receive end of the first signal may be the communication peer end (that is, the second communication device), that is, the network side device.

Optionally, the first communication device may be a network side device, and a communication peer end (that is, the second communication device) may be a terminal. The transmit end of the first signal may be the first communication device, that is, the network side device, and the receive end of the first signal may be the communication peer end (that is, the second communication device), that is, the terminal.

Optionally, the first communication device may be a terminal, and a communication peer end (that is, the second communication device) may be another terminal. The transmit end of the first signal may be the first communication device, that is, the terminal, and the receive end of the first signal may be the communication peer end (that is, the second communication device), that is, the another terminal.

Optionally, to overcome a defect of low transmission performance caused by signal diffusion in the prior art, in this embodiment of this application, windowing may be performed in the time-frequency domain at at least one time node of before transmission of the first signal and after transmission of the signal, to reduce side lobes of the signal, thereby reducing diffusion of the signal and improving signal transmission performance.

Optionally, in a transmission process of the first signal, windowing may be performed in the time-frequency domain at only the transmit end (the first communication device) of the first signal. The second communication device does not perform windowing shown in FIG. 8 on a received signal.

Optionally, in a transmission process of the second signal, windowing may be performed in the time-frequency domain at both the transmit end and the receive end of the first signal. After receiving the third signal, the second communication device may perform a windowing process shown in FIG. 8. In this case, the third signal received by the second communication device is the first signal in FIG. 8. Details are not described herein again.

Optionally, because the first signal and the second signal essentially include same information content, the transmit end of the first signal is also a transmit end of the second signal, the receive end of the first signal is also a receive end of the second signal, and the transmission process of the first signal may be understood as a transmission process of the same information content included in the first signal and the second signal.

In this embodiment of this application, windowing is performed on a transmitted signal in the time-frequency domain at the transmit side of the first signal, to effectively reduce a side lobe of signal transmission, thereby reducing diffusion of the signal and improving signal transmission performance.

Optionally, the method further includes:

in a case that a pilot signal of the second signal in the delay-Doppler domain is a pilot signal used for measuring quality of a physical channel, removing, by the second communication device, an impact of the windowing on the pilot signal.

Optionally, in a case that the pilot signal is the pilot signal used for measuring quality of a physical channel, and a data signal and the pilot signal of the second signal are directly converted into the time-frequency domain and then windowing is performed, after receiving the second signal, the second communication device may remove an impact of the windowing on the pilot signal by using an algorithm, for example, by using a window matrix pointwise division algorithm.

Optionally, the method further includes:

receiving, by the second communication device, first signaling sent by the first communication device; and
determining, by the second communication device, parameter information of a window function based on the first signaling, where
the parameter information is used for at least one of the following:

determining the window function;
determining the window matrix based on the window function; and
determining the window matrix, where
the window matrix is used for the windowing.

Optionally, after receiving the first signaling, the second communication device may learn, based on the first signaling, the window matrix used for windowing and may perform a corresponding operation, for example, windowing or additional window removal.

Optionally, after receiving the first signaling, the second communication device may obtain the parameter information of the window function, determine, based on the parameter information, the window function used for constructing the window matrix, and determine a construction manner of the window matrix based on the window function; and further determine the window matrix based on the window function and the construction manner of the window matrix.

Optionally, after receiving the first signaling, the second communication device may obtain the parameter information of the window function, and determine, based on the parameter information, the window function used for constructing the window matrix. A manner of determining the window matrix based on the window function may be preset or learned in any other possible manner. This is not limited in this embodiment of this application. Further, the window matrix may be determined based on the window function and the construction manner of the window matrix.

Optionally, after receiving the first signaling, the second communication device may obtain the parameter information of the window function, directly determine the window matrix based on the parameter information, and may further learn the window function while learning the window matrix based on the parameter information, or determine a construction manner of the window matrix based on the window function, or learn the window function and determine a construction manner of the window matrix based on the window function. This is not limited in this embodiment of this application.

Optionally, the method further includes:

receiving, by the second communication device, second signaling sent by the first communication device; and
determining, by the second communication device, a type of the pilot signal based on the second signaling.

Optionally, after receiving the second signaling, the second communication device may learn, based on the second signaling, the type of the pilot signal and may perform a corresponding operation.

The type of the pilot signal of the second signal in the delay-Doppler domain may include at least of the following: a pilot signal used for demodulation; and a pilot signal used for measuring quality of a physical channel.

In this embodiment of this application, windowing is performed on a transmitted signal in the time-frequency domain at the transmit side of the first signal, to effectively reduce a side lobe of signal transmission, thereby reducing diffusion of the signal and improving signal transmission performance.

It should be noted that, the signal transmission method provided in the embodiments of this application may be performed by a signal transmission apparatus or a control module configured to perform the signal transmission method in the signal transmission apparatus. In this embodiment of this application, the signal transmission apparatus provided in this embodiment of this application is described by using an example in which the signal transmission apparatus executes the signal transmission method.

FIG. 15 is a first schematic structural diagram of a signal transmission apparatus according to an embodiment of this application. As shown in FIG. 15, the apparatus includes: a conversion module 1510 and a processing module 1520.

The conversion module 1510 is configured to convert a first signal into a time-frequency domain to obtain a second signal.

The processing module 1520 is configured to perform windowing on the second signal in the time-frequency domain, where

the first communication device includes a transmit end of the first signal and/or a receive end of the first signal;
in a case that the first communication device is the transmit end of the first signal, the first signal is a signal in a delay-Doppler domain, and the second signal obtained through windowing is used for being converted from the time-frequency domain to time domain; and
in a case that the first communication device is the receive end of the first signal, the first signal is a signal in time domain, and the second signal obtained through windowing is used for being converted from the time-frequency domain to the delay-Doppler domain.

Optionally, the signal transmission apparatus may convert the first signal into the time-frequency domain through the conversion module 1510 to obtain the second signal, and perform windowing on the second signal in the time-frequency domain through the processing module 1520.

Optionally, at the transmit end of the first signal, the first signal may be converted from the delay-Doppler domain to the time-frequency domain through the conversion module 1510, and then windowing is performed on the second signal in the time-frequency domain through the processing module 1520, and finally the second signal is converted into time domain and is sent.

Optionally, at the receive end of the first signal, the first signal may be received in time domain, then the first signal is converted from time domain to the time-frequency domain through the conversion module 1510, then windowing is performed on the second signal in the time-frequency domain through the processing module 1520, and finally the second signal is converted into the delay-Doppler domain.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

Optionally, the processing module is further configured to:

performing, by the first communication device, windowing on the second signal in the time-frequency domain based on a type of a pilot signal of the second signal in the delay-Doppler domain.

Optionally, the processing module is further configured to:

in a case that the pilot signal is a pilot signal used for demodulation, performing, by the first communication device, windowing on the second signal in the time-frequency domain.

Optionally, the processing module is further configured to:

in a case that the pilot signal is a pilot signal used for measuring quality of a physical channel, performing, by the first communication device, windowing on the second signal in a first time-frequency unit in the time-frequency domain, and skipping performing windowing on the second signal in a second time-frequency unit, where

the second signal in the first time-frequency unit is a signal obtained by converting a data signal part of the second signal in the delay-Doppler domain into the time-frequency domain; and the second signal in the second time-frequency unit is a signal obtained by converting a pilot signal part of the second signal in the delay-Doppler domain into the time-frequency domain.

Optionally, the processing module is further configured to:

in a case that the pilot signal is a pilot signal used for measuring quality of a physical channel, performing, by the first communication device, windowing on the second signal in the time-frequency domain.

Optionally, in a case that a data signal part and a pilot signal part of the second signal in the delay-Doppler domain are transmitted in a same time-frequency unit, a mapping manner of the second signal in the delay-Doppler domain is a special mapping manner.

Optionally, the special mapping manner includes skipping placing a data signal and the pilot signal at a first grid position in the delay-Doppler domain.

Optionally, the first grid position includes at least one of the following:

in the delay-Doppler domain, at least one grid position whose delay subscript is the same as a delay subscript of the pilot signal other than a grid position at which the pilot signal has been placed; and
in the delay-Doppler domain, at least one grid position whose Doppler subscript is the same as a Doppler subscript of the pilot signal other than the grid position at which the pilot signal has been placed.

Optionally, the first grid position includes at least one of the following:

in the delay-Doppler domain, all grid positions whose delay subscripts are the same as a delay subscript of the pilot signal except a grid position at which the pilot signal has been placed; and
in the delay-Doppler domain, all grid positions whose Doppler subscripts are the same as a Doppler subscript of the pilot signal except a grid position at which the pilot signal has been placed.

Optionally, the processing module is further configured to:

performing, by the first communication device, two-dimensional windowing on the second signal in the time-frequency domain.

Optionally, the processing module is further configured to:

perform a point multiplication operation on the second signal and a window matrix in the time-frequency domain, where

a dimension of the window matrix is the same as a dimension of the second signal.

Optionally, the window matrix is determined based on a window function.

Optionally, at least one row in all rows of the window matrix includes a target row vector in a time direction, and the target row vector in the time direction is determined based on the window function.

Optionally, at least one column in all columns of the window matrix includes a target column vector in a time direction, and the target column vector in the time direction is determined based on the window function.

Optionally, each row of the window matrix is a target row vector in a time direction, and the target row vector in the time direction is determined based on the window function.

Optionally, each column of the window matrix is a target column vector in a time direction, and the target column vector in the time direction is determined based on the window function.

Optionally, at least one column in all columns of the window matrix includes a target column vector in a frequency direction, and the target column vector in the frequency direction is determined based on the window function.

Optionally, at least one row in all rows of the window matrix includes a target row vector in a frequency direction, and the target row vector in the frequency direction is determined based on the window function.

Optionally, each column of the window matrix is a target column vector in a frequency direction, and the target column vector in the frequency direction is determined based on the window function.

Optionally, each row of the window matrix is a target row vector in a frequency direction, and the target row vector in the frequency direction is determined based on the window function.

Optionally, the window function includes a row vector in a time direction and a column vector in a frequency direction; and

the window matrix is determined based on joint construction of the row vector in the time direction and the column vector in the frequency direction.

Optionally, the window matrix is obtained by performing a matrix multiplication operation on the column vector in the frequency direction and the row vector in the time direction.

Optionally, the window function includes a column vector in a time direction and a row vector in a frequency direction; and

the window matrix is determined based on joint construction of the column vector in the time direction and the row vector in the frequency direction.

Optionally, the window matrix is obtained by performing a matrix multiplication operation on the column vector in the time direction and the row vector in the frequency direction.

Optionally, the window function is determined based on at least one of the following:

a rectangle window, a Gaussian window, a confined Gaussian window, an approximate confined Gaussian window, a Hamming Hamming window, Hanning Hann window, a Bartlett Bartlett window, a triangular window, a Bartlett-Hanning Bartlett-Hann window, a Blackman Blackman window, a Kaiser Kaiser window, a Nuttall Nuttall window, a Blackman-Nuttall Blackman-Nuttall window, a Blackman-Harris Blackman-Harris window, a flat top window, a Basel window, an exponential sine window, an exponential cosine window, and a Dolph-Chebyshev window.

Optionally, parameter information of the window function is predefined in a protocol or preset, and the parameter information is used for at least one of the following:

determining the window function;
determining the window matrix based on the window function; and
determining the window matrix.

Optionally, the apparatus further includes:

a first sending module, configured to send first signaling to a communication peer end, where the first signaling is used for indicating the parameter information of the window function.

Optionally, the first signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;

a message B Message B of the physical random access channel PRACH;
information about a physical uplink shared channel PUSCH;
Xn interface signaling;
PC5 interface signaling; and
sidelink Sidelink interface signaling.

Optionally, the type of the pilot signal is predefined in a protocol or preset.

Optionally, the apparatus further includes:

a second sending module, configured to send second signaling to a communication peer end, where the second signaling is used for indicating the type of the pilot signal.

Optionally, the second signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

The signal transmission apparatus in this embodiment of this application may be an apparatus, an apparatus or an electronic device having an operating system, or may be a component, an integrated circuit, or a chip in a terminal. The apparatus or the electronic device may be a mobile terminal or may be a non-mobile terminal. For example, the mobile terminal may include, but not limited to, a type of the terminal 11 listed above. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The signal transmission apparatus provided in this embodiment of this application can implement the processes implemented in the method embodiments of FIG. 2 to FIG. 14 and achieves the same technical effects. To avoid repetition, details are not described herein again.

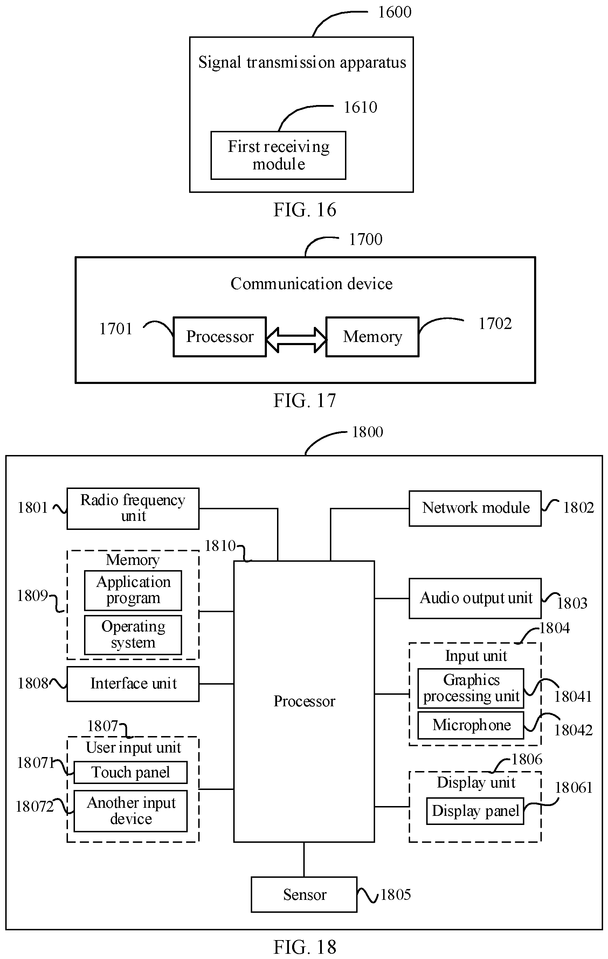

FIG. 16 is a second schematic structural diagram of a signal transmission apparatus according to an embodiment of this application. As shown in FIG. 16, the apparatus includes: a first receiving module 1610.

The first receiving module 1610 is configured to receive, in time domain, a third signal sent by a first communication device, where

the third signal is sent in time domain after the first communication device converts a first signal from a delay-Doppler domain to a time-frequency domain to obtain a second signal and performs windowing on the second signal.

Optionally, the signal transmission apparatus may receive, through the first receiving module 1610 in time domain, the second signal sent in time domain after the transmit end of the first signal converts the first signal from the delay-Doppler domain to the time-frequency domain.

In this embodiment of this application, windowing is performed on a transmitted signal in the time-frequency domain at the transmit side of the first signal, and then the signal is received at a communication peer side, to effectively reduce a side lobe of signal transmission, thereby reducing diffusion of the signal and improving signal transmission performance.

Optionally, the apparatus further includes:

a removing module, configured to: in a case that a pilot signal of the second signal in the delay-Doppler domain is a pilot signal used for measuring quality of a physical channel, remove an impact of the windowing on the pilot signal.

Optionally, the apparatus further includes:

a second receiving module, configured to receive first signaling sent by the first communication device; and
a first determining module, configured to determine parameter information of a window function based on the first signaling, where
the parameter information is used for at least one of the following:

determining the window function;
determining the window matrix based on the window function; and
determining the window matrix, where
the window matrix is used for the windowing.

Optionally, the apparatus further includes:

a third receiving module, configured to receive second signaling sent by the first communication device; and
a second determining module, configured to determine a type of the pilot signal based on the second signaling.

In this embodiment of this application, windowing is performed on a transmitted signal in the time-frequency domain at the transmit side of the first signal, and then the signal is received at a communication peer side, to effectively reduce a side lobe of signal transmission, thereby reducing diffusion of the signal and improving signal transmission performance.

The signal transmission apparatus in this embodiment of this application may be an apparatus, an apparatus or an electronic device having an operating system, or may be a component, an integrated circuit, or a chip in a terminal. The apparatus or the electronic device may be a mobile terminal or may be a non-mobile terminal. For example, the mobile terminal may include, but not limited to, a type of the terminal 11 listed above. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The signal transmission apparatus provided in this embodiment of this application can implement the processes implemented in the method embodiments of FIG. 2 to FIG. 14 and achieves the same technical effects. To avoid repetition, details are not described herein again.

Optionally, FIG. 17 is a schematic structural diagram of a communication device according to an embodiment of this application. As shown in FIG. 17, this embodiment of this application further provides a communication device 1700, including a processor 1701, a memory 1702, and programs or instructions stored on the memory 1702 and executable on the processor 1701. For example, when the communication device 1700 is a terminal, the programs or the instructions are executed by the processor 1701 to implement each process of the foregoing embodiments of the signal transmission method, and the same technical effects can be achieved. When the communication device 1700 is a network side device, the programs or the instructions are executed by the processors 1701 to implement each process of the foregoing embodiments of the signal transmission method, and the same technical effect can be achieved. To avoid repetition, details are not repeated herein.

An embodiment of this application further provides a communication device, including a processor and a communication interface, where the processor is configured to:

convert a first signal into a time-frequency domain to obtain a second signal; and
perform windowing on the second signal in the time-frequency domain, where
the first communication device includes a transmit end of the first signal and/or a receive end of the first signal;
in a case that the first communication device is the transmit end of the first signal, the first signal is a signal in a delay-Doppler domain, and the second signal obtained through windowing is used for being converted from the time-frequency domain to time domain; and
in a case that the first communication device is the receive end of the first signal, the first signal is a signal in time domain, and the second signal obtained through windowing is used for being converted from the time-frequency domain to the delay-Doppler domain.

The communication device embodiment corresponds to the method embodiment at the first communication device side, and each implementation process and implementation of the method embodiments are applicable to the communication device embodiment and can achieve the same technical effect.

Optionally, the first communication device may be a terminal, and the second communication device may be a network side device.

Optionally, the first communication apparatus may be a network side device, and the second communication device may be a terminal.

Optionally, the first communication device may be a terminal, and the second communication device may be a terminal.

Specifically, FIG. 18 is a schematic diagram of a hardware structure of a terminal according to an embodiment of this application.

The terminal 1800 includes, but not limited to, at least some components of a radio frequency unit 1801, a network module 1802, an audio output unit 1803, an input unit 1804, a sensor 1805, a display unit 1806, a user input unit 1807, an interface unit 1808, a memory 1809, a processor 1810, and the like.

A person skilled in the art may understand that the terminal 1800 may further include a power supply (for example, a battery) for supplying power to the components. The power supply may logically connect to the processor 1810 by a power supply management system, thereby implementing functions, such as charging, discharging, and power consumption management, by using the power supply management system. A terminal structure shown in FIG. 18 does not constitute a limitation to the terminal, and the terminal may include more or fewer components than those shown in the figure, or some components may be combined, or a different component deployment may be used. Details are not described herein again.

It should be understood that in this embodiment of this application, the input unit 1804 may include a graphics processing unit (Graphics Processing Unit, GPU) 18041 and a microphone 18042. The graphics processing unit 18041 performs processing on image data of a static picture or a video that is obtained by an image acquisition device (for example, a camera) in a video acquisition mode or an image acquisition mode. The display unit 1806 may include a display panel 18061, for example, the display panel 18061 configured in a form such as a liquid crystal display or an organic light-emitting diode. The user input unit 1807 includes a touch panel 18071 and another input device 18072. The touch panel 18071 is also referred to as a touchscreen. The touch panel 18071 may include two parts: a touch detection apparatus and a touch controller. The another input device 18072 may include, but not limited to, a physical keyboard, a functional key (for example, a volume control key or a switch key), a track ball, a mouse, and a joystick, which are not described herein in detail.

In this embodiment of this application, after receiving downlink data from a network side device, the radio frequency unit 1801 sends the downlink data to the processor 1810 for processing. In addition, uplink data is sent to the network side device. Generally, the radio frequency unit 1801 includes, but not limited to, an antenna, at least one amplifier, a transceiver, a coupler, a low noise amplifier, a duplexer, and the like.

The memory 1809 may be configured to store a software program or instructions and various data. The memory 1809 may mainly include a program or instruction storage area and a data storage area. The program or instruction storage area may store an operating system, an application program or instruction required by at least one function (for example, a sound playback function and an image display function), and the like. In addition, the memory 1809 may include a high speed random access memory, and may further include a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. For example, at least one magnetic disk storage device, a flash memory device, or other on-volatile solid-state storage devices.

The processor 1810 may include one or more processing units. Optionally, the processor 1810 may integrate an application processor and a modem processor. The application processor mainly processes an operating system, a user interface, an application program or instructions, and the like. The modem processor mainly processes wireless communication, for example, a baseband processor. It may be understood that the foregoing modem processor may either not be integrated into the processor 1810.

In a case that the first communication device is the terminal, the processor 1810 is configured to:

convert a first signal into a time-frequency domain to obtain a second signal; and
perform windowing on the second signal in the time-frequency domain, where
the first communication device includes a transmit end of the first signal and/or a receive end of the first signal;
in a case that the first communication device is the transmit end of the first signal, the first signal is a signal in a delay-Doppler domain, and the second signal obtained through windowing is used for being converted from the time-frequency domain to time domain; and
in a case that the first communication device is the receive end of the first signal, the first signal is a signal in time domain, and the second signal obtained through windowing is used for being converted from the time-frequency domain to the delay-Doppler domain.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

Optionally, the processor 1810 is configured to:
perform windowing on the second signal in the time-frequency domain based on a type of a pilot signal of the second signal in the delay-Doppler domain.

Optionally, the processor 1810 is configured to:
in a case that the pilot signal is a pilot signal used for demodulation, perform windowing on the second signal in the time-frequency domain.

Optionally, the processor 1810 is configured to:

in a case that the pilot signal is a pilot signal used for measuring quality of a physical channel, perform windowing on the second signal in a first time-frequency unit in the time-frequency domain, and skip performing windowing on the second signal in a second time-frequency unit, where
the second signal in the first time-frequency unit is a signal obtained by converting a data signal part of the second signal in the delay-Doppler domain into the time-frequency domain; and the second signal in the second time-frequency unit is a signal obtained by converting a pilot signal part of the second signal in the delay-Doppler domain into the time-frequency domain.

Optionally, the processor 1810 is configured to:
in a case that the pilot signal is a pilot signal used for measuring quality of a physical channel, perform windowing on the second signal in the time-frequency domain.

Optionally, in a case that a data signal part and a pilot signal part of the second signal in the delay-Doppler domain are transmitted in a same time-frequency unit, a mapping manner of the second signal in the delay-Doppler domain is a special mapping manner.

Optionally, the special mapping manner includes skipping placing a data signal and the pilot signal at a first grid position in the delay-Doppler domain.

Optionally, the first grid position includes at least one of the following:

in the delay-Doppler domain, at least one grid position whose delay subscript is the same as a delay subscript of the pilot signal other than a grid position at which the pilot signal has been placed; and
in the delay-Doppler domain, at least one grid position whose Doppler subscript is the same as a Doppler subscript of the pilot signal other than the grid position at which the pilot signal has been placed.

Optionally, the first grid position includes at least one of the following:

in the delay-Doppler domain, all grid positions whose delay subscripts are the same as a delay subscript of the pilot signal except a grid position at which the pilot signal has been placed; and
in the delay-Doppler domain, all grid positions whose Doppler subscripts are the same as a Doppler subscript of the pilot signal except a grid position at which the pilot signal has been placed.

Optionally, the processor 1810 is configured to:
perform two-dimensional windowing on the second signal in the time-frequency domain.

Optionally, the processor 1810 is configured to:

perform a point multiplication operation on the second signal and a window matrix in the time-frequency domain, where

a dimension of the window matrix is the same as a dimension of the second signal.

Optionally, the window matrix is determined based on a window function.

Optionally, at least one row in all rows of the window matrix includes a target row vector in a time direction, and the target row vector in the time direction is determined based on the window function.

Optionally, at least one column in all columns of the window matrix includes a target column vector in a time direction, and the target column vector in the time direction is determined based on the window function.

Optionally, each row of the window matrix is a target row vector in a time direction, and the target row vector in the time direction is determined based on the window function.

Optionally, each column of the window matrix is a target column vector in a time direction, and the target column vector in the time direction is determined based on the window function.

Optionally, at least one column in all columns of the window matrix includes a target column vector in a frequency direction, and the target column vector in the frequency direction is determined based on the window function.

Optionally, at least one row in all rows of the window matrix includes a target row vector in a frequency direction, and the target row vector in the frequency direction is determined based on the window function.

Optionally, each column of the window matrix is a target column vector in a frequency direction, and the target column vector in the frequency direction is determined based on the window function.

Optionally, each row of the window matrix is a target row vector in a frequency direction, and the target row vector in the frequency direction is determined based on the window function.

Optionally, the window function includes a row vector in a time direction and a column vector in a frequency direction; and

the window matrix is determined based on joint construction of the row vector in the time direction and the column vector in the frequency direction.

Optionally, the window matrix is obtained by performing a matrix multiplication operation on the column vector in the frequency direction and the row vector in the time direction.

Optionally, the window function includes a column vector in a time direction and a row vector in a frequency direction; and

the window matrix is determined based on joint construction of the column vector in the time direction and the row vector in the frequency direction.

Optionally, the window matrix is obtained by performing a matrix multiplication operation on the column vector in the time direction and the row vector in the frequency direction.

Optionally, the window function is determined based on at least one of the following:

a rectangle window, a Gaussian window, a confined Gaussian window, an approximate confined Gaussian window, a Hamming Hamming window, Hanning Hann window, a Bartlett Bartlett window, a triangular window, a Bartlett-Hanning Bartlett-Hann window, a Blackman Blackman window, a Kaiser Kaiser window, a Nuttall Nuttall window, a Blackman-Nuttall Blackman-Nuttall window, a Blackman-Harris Blackman-Harris window, a flat top window, a Basel window, an exponential sine window, an exponential cosine window, and a Dolph-Chebyshev window.

Optionally, parameter information of the window function is predefined in a protocol or preset, and the parameter information is used for at least one of the following:

determining the window function;
determining the window matrix based on the window function; and
determining the window matrix.

Optionally, the processor 1810 is configured to:
send first signaling to a communication peer end, where the first signaling is used for indicating the parameter information of the window function.

Optionally, the first signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

Optionally, the type of the pilot signal is predefined in a protocol or preset.

Optionally, the processor 1810 is configured to:
send second signaling to a communication peer end, where the second signaling is used for indicating the type of the pilot signal.

Optionally, the second signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

Alternatively, in a case that the second communication device is the terminal, the processor 1810 is configured to:

receive, in time domain, a third signal sent by a first communication device, where
the third signal is sent in time domain after the first communication device converts a first signal from a delay-Doppler domain to a time-frequency domain to obtain a second signal and performs windowing on the second signal.

In this embodiment of this application, windowing is performed on a transmitted signal in the time-frequency domain at the transmit side of the first signal, and then the signal is received at a communication peer side, to effectively reduce a side lobe of signal transmission, thereby reducing diffusion of the signal and improving signal transmission performance.

Optionally, the processor 1810 is configured to:

in a case that the pilot signal of the second signal in the delay-Doppler domain is a pilot signal used for measuring quality of a physical channel, remove an impact of the windowing on the pilot signal.

Optionally, the processor 1810 is configured to:

receive first signaling sent by the first communication device; and
determine parameter information of a window function based on the first signaling, where
the parameter information is used for at least one of the following:

determining the window function;
determining the window matrix based on the window function; and
determining the window matrix, where
the window matrix is used for the windowing.

Optionally, the processor 1810 is configured to:

receive second signaling sent by the first communication device; and
determine a type of the pilot signal based on the second signaling.

In this embodiment of this application, windowing is performed on a transmitted signal in the time-frequency domain at the transmit side of the first signal, and then the signal is received at a communication peer side, to effectively reduce a side lobe of signal transmission, thereby reducing diffusion of the signal and improving signal transmission performance.

An embodiment of this application further provides a communication device, including a processor and a communication interface, where the communication interface is configured to:

receive, in time domain, a third signal sent by a first communication device, where

the third signal is sent in time domain after the first communication device converts a first signal from a delay-Doppler domain to a time-frequency domain to obtain a second signal and performs windowing on the second signal.

The communication device embodiment corresponds to the method embodiment of the second communication device, and each implementation process and implementation of the method embodiments are applicable to the communication device embodiment and can achieve the same technical effect.

Optionally, the first communication device may be a terminal, and the second communication device may be a network side device.

Optionally, the first communication apparatus may be a network side device, and the second communication device may be a terminal.

Optionally, the first communication device may be a terminal, and the second communication device may be a terminal.

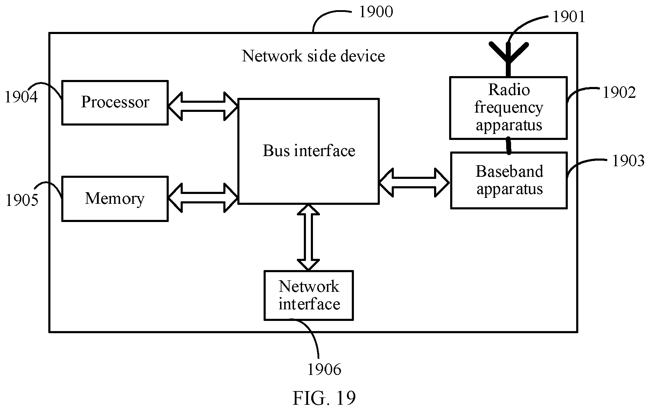

FIG. 19 is a schematic structural diagram of a network side device according to an embodiment of this application. As shown in FIG. 19, the network side device 1900 includes an antenna 1901, a radio frequency apparatus 1902, and a baseband apparatus 1903. The antenna 1901 is connected to the radio frequency apparatus 1902. In an uplink direction, the radio frequency apparatus 1902 receives, by using the antenna 1901, information, and sends the received information to the baseband apparatus 1903 for processing. In a downlink direction, the baseband apparatus 1903 processes to-be-sent information, and sends the information to the radio frequency apparatus 1902. The radio frequency apparatus 1902 processes the received information and sends out the information by using the antenna 1901.

The frequency band processing apparatus may be located in the baseband apparatus 1903, the methods performed by the network-side device in the foregoing embodiments may be implemented in the baseband apparatus 1903, and the baseband apparatus 1903 includes a processor 1904 and a memory 1905.

The baseband apparatus 1903 may include, for example, at least one baseband plate. A plurality of chips are disposed on the baseband plate. As shown in FIG. 19, one of the plurality of chips is, for example, the processor 1904, and is connected to the memory 1905, to invoke a program in the memory 1905 to perform operations of the network device in the foregoing method embodiment.

The baseband apparatus 1903 may further include a network interface 1906, configured to exchange information with the radio frequency apparatus 1902. The interface is, for example, a common public radio interface (common public radio interface, CPRI).

Specifically, the network side device in this embodiment of the present invention further includes: instructions or programs stored on the memory 1905 and executable on the processor 1904, the processor 1904 invokes the instructions or programs in the memory 1905 to perform the methods performed by the modules in FIG. 14 or FIG. 15, and the same technical effects are achieved. To avoid repetitions, details are not described herein again.

In a case that the first communication device is the network side device, the processor 1904 is configured to:

convert a first signal into a time-frequency domain to obtain a second signal; and
perform windowing on the second signal in the time-frequency domain, where
the first communication device includes a transmit end of the first signal and/or a receive end of the first signal;
in a case that the first communication device is the transmit end of the first signal, the first signal is a signal in a delay-Doppler domain, and the second signal obtained through windowing is used for being converted from the time-frequency domain to time domain; and
in a case that the first communication device is the receive end of the first signal, the first signal is a signal in time domain, and the second signal obtained through windowing is used for being converted from the time-frequency domain to the delay-Doppler domain.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

Optionally, the processor 1904 is configured to:
perform windowing on the second signal in the time-frequency domain based on a type of a pilot signal of the second signal in the delay-Doppler domain.

Optionally, the processor 1904 is configured to:
in a case that the pilot signal is a pilot signal used for demodulation, perform windowing on the second signal in the time-frequency domain.

Optionally, the processor 1904 is configured to:

in a case that the pilot signal is a pilot signal used for measuring quality of a physical channel, performing, by the first communication device, windowing on the second signal in a first time-frequency unit in the time-frequency domain, and skipping performing windowing on the second signal in a second time-frequency unit, where the second signal in the first time-frequency unit is a signal obtained by converting a data signal part of the second signal in the delay-Doppler domain into the time-frequency domain; and the second signal in the second time-frequency unit is a signal obtained by converting a pilot signal part of the second signal in the delay-Doppler domain into the time-frequency domain.

Optionally, the processor 1904 is configured to:
in a case that the pilot signal is a pilot signal used for measuring quality of a physical channel, performing, by the first communication device, windowing on the second signal in the time-frequency domain.

Optionally, in a case that a data signal part and a pilot signal part of the second signal in the delay-Doppler domain are transmitted in a same time-frequency unit, a mapping manner of the second signal in the delay-Doppler domain is a special mapping manner.

Optionally, the special mapping manner includes skipping placing a data signal and the pilot signal at a first grid position in the delay-Doppler domain.

Optionally, the first grid position includes at least one of the following:

in the delay-Doppler domain, at least one grid position whose delay subscript is the same as a delay subscript of the pilot signal other than a grid position at which the pilot signal has been placed; and
in the delay-Doppler domain, at least one grid position whose Doppler subscript is the same as a Doppler subscript of the pilot signal other than the grid position at which the pilot signal has been placed.

Optionally, the first grid position includes at least one of the following:

in the delay-Doppler domain, all grid positions whose delay subscripts are the same as a delay subscript of the pilot signal except a grid position at which the pilot signal has been placed; and
in the delay-Doppler domain, all grid positions whose Doppler subscripts are the same as a Doppler subscript of the pilot signal except a grid position at which the pilot signal has been placed.

Optionally, the processor 1904 is configured to:
perform two-dimensional windowing on the second signal in the time-frequency domain.

Optionally, the processor 1904 is configured to:

perform a point multiplication operation on the second signal and a window matrix in the time-frequency domain, where
a dimension of the window matrix is the same as a dimension of the second signal.

Optionally, the window matrix is determined based on a window function.

Optionally, at least one row in all rows of the window matrix includes a target row vector in a time direction, and the target row vector in the time direction is determined based on the window function.

Optionally, at least one column in all columns of the window matrix includes a target column vector in a time direction, and the target column vector in the time direction is determined based on the window function.

Optionally, each row of the window matrix is a target row vector in a time direction, and the target row vector in the time direction is determined based on the window function.

Optionally, each column of the window matrix is a target column vector in a time direction, and the target column vector in the time direction is determined based on the window function.

Optionally, at least one column in all columns of the window matrix includes a target column vector in a frequency direction, and the target column vector in the frequency direction is determined based on the window function.

Optionally, at least one row in all rows of the window matrix includes a target row vector in a frequency direction, and the target row vector in the frequency direction is determined based on the window function.

Optionally, each column of the window matrix is a target column vector in a frequency direction, and the target column vector in the frequency direction is determined based on the window function.

Optionally, each row of the window matrix is a target row vector in a frequency direction, and the target row vector in the frequency direction is determined based on the window function.

Optionally, the window function includes a row vector in a time direction and a column vector in a frequency direction; and
the window matrix is determined based on joint construction of the row vector in the time direction and the column vector in the frequency direction.

Optionally, the window matrix is obtained by performing a matrix multiplication operation on the column vector in the frequency direction and the row vector in the time direction.

Optionally, the window function includes a column vector in a time direction and a row vector in a frequency direction; and

the window matrix is determined based on joint construction of the column vector in the time direction and the row vector in the frequency direction.

Optionally, the window matrix is obtained by performing a matrix multiplication operation on the column vector in the time direction and the row vector in the frequency direction.

Optionally, the window function is determined based on at least one of the following:

a rectangle window, a Gaussian window, a confined Gaussian window, an approximate confined Gaussian window, a Hamming Hamming window, Hanning Hann window, a Bartlett Bartlett window, a triangular window, a Bartlett-Hanning Bartlett-Hann window, a Blackman Blackman window, a Kaiser Kaiser window, a Nuttall Nuttall window, a Blackman-Nuttall Blackman-Nuttall window, a Blackman-Harris Blackman-Harris window, a flat top window, a Basel window, an exponential sine window, an exponential cosine window, and a Dolph-Chebyshev window.

Optionally, parameter information of the window function is predefined in a protocol or preset, and the parameter information is used for at least one of the following:

determining the window function;
determining the window matrix based on the window function; and
determining the window matrix.

Optionally, the processor 1904 is configured to:
send first signaling to a communication peer end, where the first signaling is used for indicating the parameter information of the window function.

Optionally, the first signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

Optionally, the type of the pilot signal is predefined in a protocol or preset.

Optionally, the processor 1904 is configured to:
send second signaling to a communication peer end, where the second signaling is used for indicating the type of the pilot signal.

Optionally, the second signaling includes at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;

a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

In this embodiment of this application, windowing is performed on a transmitted signal in the time-frequency domain at at least one of the receive side and the transmit side of the first signal, to effectively reduce a side lobe of signal transmission, thereby reducing diffusion of the signal and improving signal transmission performance.

Alternatively, in a case that the second communication device is the network side device, the processor 1904 is configured to:

receive, in time domain, a third signal sent by a first communication device, where
the third signal is sent in time domain after the first communication device converts a first signal from a delay-Doppler domain to a time-frequency domain to obtain a second signal and performs windowing on the second signal.

In this embodiment of this application, windowing is performed on a transmitted signal in the time-frequency domain at the transmit side of the first signal, and then the signal is received at a communication peer side, to effectively reduce a side lobe of signal transmission, thereby reducing diffusion of the signal and improving signal transmission performance.

Optionally, the processor 1904 is configured to:
in a case that the pilot signal of the second signal in the delay-Doppler domain is a pilot signal used for measuring quality of a physical channel, remove an impact of the windowing on the pilot signal.

Optionally, the processor 1904 is configured to:

receive first signaling sent by the first communication device; and
determine parameter information of a window function based on the first signaling, where
the parameter information is used for at least one of the following:

determining the window function;
determining the window matrix based on the window function; and
determining the window matrix, where
the window matrix is used for the windowing.

Optionally, the processor 1904 is configured to:

receive second signaling sent by the first communication device; and
determine a type of the pilot signal based on the second signaling.

In this embodiment of this application, windowing is performed on a transmitted signal in the time-frequency domain at the transmit side of the first signal, and then the signal is received at a communication peer side, to effectively reduce a side lobe of signal transmission, thereby reducing diffusion of the signal and improving signal transmission performance.

An embodiment of this application further provides a readable storage medium, storing programs or instructions, where the programs or the instructions are executed by a processor to implement each process of the foregoing embodiments of the signal transmission method, and the same technical effect can be achieved. To avoid repetition, details are not repeated herein.

The processor is the processor in the terminal in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, including a processor and a communication interface, where the communication interface is coupled to the processor, and the processor is configured to run programs or the instructions, to implement each process of the foregoing embodiments of the signal transmission method, and the same technical effect can be achieved. To avoid repetition, details are not repeated herein.

It should be understood that, the chip mentioned in this embodiment of this application may also be referred to as a system-level chip, a system chip, a chip system, a system on chip, or the like.

An embodiment of this application further provides a computer program/program product, stored in a non-volatile storage medium, where the program/program product is executed by at least one processor to implement each process of the method embodiments reported by the system message, and the same technical effect can be achieved. To avoid repetition, details are not repeated herein.

It should be noted that, the terms "include", "including", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the related art may be implemented in the form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the method described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

**Claims**

**1.** A signal transmission method, comprising:

converting, by a first communication device, a first signal into a time-frequency domain to obtain a second signal; and

performing, by the first communication device, windowing on the second signal in the time-frequency domain, wherein

the first communication device comprises a transmit end of the first signal and/or a receive end of the first signal;

in a case that the first communication device is the transmit end of the first signal, the first signal is a signal in a delay-Doppler domain, and the second signal obtained through windowing is used for being converted from the time-frequency domain to a time domain; and

in a case that the first communication device is the receive end of the first signal, the first signal is a signal in the time domain, and the second signal obtained through windowing is used for being converted from the time-frequency domain to the delay-Doppler domain.

**2.** The signal transmission method according to claim 1, wherein the performing, by the first communication device, windowing on the second signal in the time-frequency domain comprises:

performing, by the first communication device, windowing on the second signal in the time-frequency domain based on a type of a pilot signal of the second signal in the delay-Doppler domain.

**3.** The signal transmission method according to claim 2, wherein the performing, by the first communication device, windowing on the second signal in the time-frequency domain based on a type of a pilot signal of the second signal in the delay-Doppler domain comprises:

in a case that the pilot signal is a pilot signal used for demodulation, performing, by the first communication device, windowing on the second signal in the time-frequency domain.

**4.** The signal transmission method according to claim 2, wherein the performing, by the first communication device, windowing on the second signal in the time-frequency domain based on a type of a pilot signal of the second signal in the delay-Doppler domain comprises:

in a case that the pilot signal is a pilot signal used for measuring quality of a physical channel, performing, by the first communication device, windowing on the second signal in a first time-frequency unit in the time-frequency domain, and skipping performing windowing on the second signal in a second time-frequency unit, wherein the second signal in the first time-frequency unit is a signal obtained by converting a data signal part of the second signal in the delay-Doppler domain into the time-frequency domain; and the second signal in the second time-frequency unit is a signal obtained by converting a pilot signal part of the second signal in the delay-Doppler domain into the time-frequency domain.

5. The signal transmission method according to claim 2, wherein the performing, by the first communication device, windowing on the second signal in the time-frequency domain based on a type of a pilot signal of the second signal in the delay-Doppler domain comprises:
in a case that the pilot signal is a pilot signal used for measuring quality of a physical channel, performing, by the first communication device, windowing on the second signal in the time-frequency domain.

6. The signal transmission method according to claim 5, wherein in a case that a data signal part and a pilot signal part of the second signal in the delay-Doppler domain are transmitted in a same time-frequency unit, a mapping manner of the second signal in the delay-Doppler domain is a special mapping manner.

7. The signal transmission method according to claim 6, wherein the special mapping manner comprises skipping placing a data signal and the pilot signal at a first grid position in the delay-Doppler domain.

8. The signal transmission method according to claim 7, wherein the first grid position comprises at least one of the following:

in the delay-Doppler domain, at least one grid position whose delay subscript is same as a delay subscript of the pilot signal other than a grid position at which the pilot signal has been placed; and
in the delay-Doppler domain, at least one grid position whose Doppler subscript is same as a Doppler subscript of the pilot signal other than the grid position at which the pilot signal has been placed.

9. The signal transmission method according to claim 7, wherein the first grid position comprises at least one of the following:

in the delay-Doppler domain, all grid positions whose delay subscripts are same as a delay subscript of the pilot signal except a grid position at which the pilot signal has been placed; and
in the delay-Doppler domain, all grid positions whose Doppler subscripts are same as a Doppler subscript of the pilot signal except a grid position at which the pilot signal has been placed.

10. The signal transmission method according to any one of claims 1 to 9, wherein the performing, by the first communication device, windowing on the second signal in the time-frequency domain comprises:
performing, by the first communication device, two-dimensional windowing on the second signal in the time-frequency domain.

11. The signal transmission method according to claim 10, wherein the performing, by the first communication device, two-dimensional windowing on the second signal in the time-frequency domain comprises:

performing, by the first communication device, a point multiplication operation on the second signal and a window matrix in the time-frequency domain, wherein
a dimension of the window matrix is same as a dimension of the second signal.

12. The signal transmission method according to claim 11, wherein the window matrix is determined based on a window function.

13. The signal transmission method according to claim 12, wherein at least one row in all rows of the window matrix comprises a target row vector in a time direction, and the target row vector in the time direction is determined based on the window function.

14. The signal transmission method according to claim 12, wherein at least one column in all columns of the window matrix comprises a target column vector in a time direction, and the target column vector in the time direction is determined based on the window function.

15. The signal transmission method according to claim 12, wherein each row of the window matrix is a target row vector in a time direction, and the target row vector in the time direction is determined based on the window function.

16. The signal transmission method according to claim 12, wherein each column of the window matrix is a target column vector in a time direction, and the target column vector in the time direction is determined based on the window function.

17. The signal transmission method according to claim 12, wherein at least one column in all columns of the window matrix comprises a target column vector in a frequency direction, and the target column vector in the frequency direction is determined based on the window function.

18. The signal transmission method according to claim 12, wherein at least one row in all rows of the window matrix comprises a target row vector in a frequency direction, and the target row vector in the frequency direction is determined based on the window function.

19. The signal transmission method according to claim 12, wherein each column of the window matrix is a target column vector in a frequency direction, and the target column vector in the frequency direction is determined based on the window function.

20. The signal transmission method according to claim 12, wherein each row of the window matrix is a target row vector in a frequency direction, and the target row vector in the frequency direction is determined based on the window function.

21. The signal transmission method according to claim 12, wherein the window function comprises a row vector in a time direction and a column vector in a frequency direction; and
the window matrix is determined based on joint construction of the row vector in the time direction and the column vector in the frequency direction.

22. The signal transmission method according to claim 21, wherein the window matrix is obtained by performing a matrix multiplication operation on the column vector in the frequency direction and the row vector in the time direction.

23. The signal transmission method according to claim 12, wherein the window function comprises a column vector in a time direction and a row vector in a frequency direction; and
the window matrix is determined based on joint construction of the column vector in the time direction and the row vector in the frequency direction.

24. The signal transmission method according to claim 23, wherein the window matrix is obtained by performing a matrix multiplication operation on the column vector in the time direction and the row vector in the frequency direction.

25. The signal transmission method according to any one of claims 12 to 24, wherein the window function is determined based on at least one of the following:
a rectangle window, a Gaussian window, a confined Gaussian window, an approximate confined Gaussian window, a Hamming window, Hanning window, a Bartlett window, a triangular window, a Bartlett-Hanning window, a Blackman window, a Kaiser window, a Nuttall window, a Blackman-Nuttall window, a Blackman-Harris window, a flat top window, a Basel window, an exponential sine window, an exponential cosine window, and a Dolph-Chebyshev window.

26. The signal transmission method according to any one of claims 12 to 24, wherein parameter information of the window function is predefined in a protocol or preset, and the parameter information is used for at least one of the following:

determining the window function;
determining the window matrix based on the window function; and
determining the window matrix.

**27.** The signal transmission method according to claim 26, wherein the method further comprises:
sending, by the first communication device, first signaling to a communication peer end, wherein the first signaling is used for indicating the parameter information of the window function.

**28.** The signal transmission method according to claim 27, wherein the first signaling comprises at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

**29.** The signal transmission method according to any one of claims 2 to 24, wherein the type of the pilot signal is predefined in a protocol or preset.

**30.** The signal transmission method according to claim 29, wherein the method further comprises:
sending, by the first communication device, second signaling to a communication peer end, wherein the second signaling is used for indicating the type of the pilot signal.

**31.** The signal transmission method according to claim 30, wherein the second signaling comprises at least one of the following:

radio resource control RRC signaling;
layer 1 signaling of a physical downlink control channel PDCCH;
information about a physical downlink shared channel PDSCH;
signaling of a media access control control element MAC;
a system information block SIB;
layer 1 signaling of a physical uplink control channel PUCCH;
a message 1 Message 1 of a physical random access channel PRACH;
a message 2 Message 2 of the physical random access channel PRACH;
a message 3 Message 3 of the physical random access channel PRACH;
a message 4 Message 4 of the physical random access channel PRACH;
a message A Message A of the physical random access channel PRACH;
a message B Message B of the physical random access channel PRACH;
information about a physical uplink shared channel PUSCH;
Xn interface signaling;
PC5 interface signaling; and
sidelink Sidelink interface signaling.

**32.** A signal transmission method, comprising:

receiving, by a second communication device in a time domain, a third signal sent by a first communication device, wherein
the third signal is sent in the time domain after the first communication device converts a first signal from a delay-Doppler domain to a time-frequency domain to obtain a second signal and performs windowing on the second signal.

33. The signal transmission method according to claim 32, wherein the method further comprises:
in a case that a pilot signal of the second signal in the delay-Doppler domain is a pilot signal used for measuring quality of a physical channel, removing, by the second communication device, an impact of the windowing on the pilot signal.

34. The signal transmission method according to claim 32 or 33, wherein the method further comprises:

receiving, by the second communication device, first signaling sent by the first communication device; and
determining, by the second communication device, parameter information of a window function based on the first signaling, wherein
the parameter information is used for at least one of the following:

determining the window function;
determining a window matrix based on the window function; and
determining the window matrix, wherein
the window matrix is used for the windowing.

35. The signal transmission method according to claim 33, wherein the method further comprises:

receiving, by the second communication device, second signaling sent by the first communication device; and
determining, by the second communication device, a type of the pilot signal based on the second signaling.

36. A signal transmission apparatus, comprising:

a conversion module, configured to convert a first signal into a time-frequency domain to obtain a second signal; and
a processing module, configured to perform windowing on the second signal in the time-frequency domain, wherein
the first communication device comprises a transmit end of the first signal and/or a receive end of the first signal;
in a case that the first communication device is the transmit end of the first signal, the first signal is a signal in a delay-Doppler domain, and the second signal obtained through windowing is used for being converted from the time-frequency domain to a time domain; and
in a case that the first communication device is the receive end of the first signal, the first signal is a signal in the time domain, and the second signal obtained through windowing is used for being converted from the time-frequency domain to the delay-Doppler domain.

37. The signal transmission apparatus according to claim 36, wherein the processing module is further configured to:
perform windowing on the second signal in the time-frequency domain based on a type of a pilot signal of the second signal in the delay-Doppler domain.

38. The signal transmission apparatus according to claim 37, wherein the processing module is further configured to:
in a case that the pilot signal is a pilot signal used for demodulation, perform windowing on the second signal in the time-frequency domain.

39. The signal transmission apparatus according to claim 37, wherein the processing module is further configured to:

in a case that the pilot signal is a pilot signal used for measuring quality of a physical channel, perform windowing on the second signal in a first time-frequency unit in the time-frequency domain, and skip performing windowing on the second signal in a second time-frequency unit, wherein
the second signal in the first time-frequency unit is a signal obtained by converting a data signal part of the second signal in the delay-Doppler domain into the time-frequency domain; and the second signal in the second time-frequency unit is a signal obtained by converting a pilot signal part of the second signal in the delay-Doppler domain into the time-frequency domain.

40. The signal transmission apparatus according to claim 37, wherein the processing module is further configured to:
in a case that the pilot signal is a pilot signal used for measuring quality of a physical channel, perform windowing on the second signal in the time-frequency domain.

41. The signal transmission apparatus according to claim 40, wherein in a case that a data signal part and a pilot signal part of the second signal in the delay-Doppler domain are transmitted in a same time-frequency unit, a mapping manner of the second signal in the delay-Doppler domain is a special mapping manner.

42. The signal transmission apparatus according to claim 41, wherein the special mapping manner comprises skipping placing a data signal and the pilot signal at a first grid position in the delay-Doppler domain.

43. The signal transmission apparatus according to claim 42, wherein the first grid position comprises at least one of the following:

in the delay-Doppler domain, at least one grid position whose delay subscript is same as a delay subscript of the pilot signal other than a grid position at which the pilot signal has been placed; and
in the delay-Doppler domain, at least one grid position whose Doppler subscript is same as a Doppler subscript of the pilot signal other than the grid position at which the pilot signal has been placed.

44. The signal transmission apparatus according to claim 42, wherein the first grid position comprises at least one of the following:

in the delay-Doppler domain, all grid positions whose delay subscripts are same as a delay subscript of the pilot signal except a grid position at which the pilot signal has been placed; and
in the delay-Doppler domain, all grid positions whose Doppler subscripts are same as a Doppler subscript of the pilot signal except a grid position at which the pilot signal has been placed.

45. The signal transmission apparatus according to any one of claims 36 to 44, wherein the processing module is further configured to:
perform two-dimensional windowing on the second signal in the time-frequency domain.

46. The signal transmission apparatus according to claim 45, wherein the processing module is further configured to:

perform a point multiplication operation on the second signal and a window matrix in the time-frequency domain, wherein
a dimension of the window matrix is same as a dimension of the second signal.

47. A signal transmission apparatus, comprising:

a first receiving module, configured to receive, in a time domain, a third signal sent by a first communication device, wherein
the third signal is sent in the time domain after the first communication device converts a first signal from a delay-Doppler domain to a time-frequency domain to obtain a second signal and performs windowing on the second signal.

48. The signal transmission apparatus according to claim 47, wherein the apparatus further comprises:
a removing module, configured to: in a case that a pilot signal of the second signal in the delay-Doppler domain is a pilot signal used for measuring quality of a physical channel, remove an impact of the windowing on the pilot signal.

49. The signal transmission apparatus according to claim 47 or 48, wherein the apparatus further comprises:

a second receiving module, configured to receive first signaling sent by the first communication device; and
a first determining module, configured to determine parameter information of a window function based on the first signaling, wherein
the parameter information is used for at least one of the following:

determining the window function;
determining a window matrix based on the window function; and
determining the window matrix, wherein
the window matrix is used for the windowing.

50. A communication device, comprising a processor, a memory, and programs or instructions stored in the memory and executable on the processor, wherein when the programs or the instructions are executed by the processor, the steps of the signal transmission method according to any one of claims 1 to 31 are implemented.

51. A communication device, comprising a processor, a memory, and programs or instructions stored in the memory and executable on the processor, wherein when the programs or the instructions are executed by the processor, the steps of the signal transmission method according to any one of claims 32 to 35 are implemented.

52. A readable storage medium, storing programs or instructions, wherein when the programs or the instructions are executed by a processor, the steps of the signal transmission method according to any one of claims 1 to 31 or the steps of the signal transmission method according to any one of claims 32 to 35 are implemented.

53. A chip, comprising a processor and a communication interface, wherein the communication interface is coupled to the processor, and the processor is configured to run programs or instructions, to implement the steps of the signal transmission method according to any one of claims 1 to 31 or the steps of the signal transmission method according to any one of claims 32 to 35.

54. A computer program product, wherein the program product is executed by at least one processor to implement the steps of the signal transmission method according to any one of claims 1 to 31 or the steps of the signal transmission method according to any one of claims 32 to 35.

FIG. 1

FIG. 2

Time domain pulse response

FIG. 3

FIG. 4

FIG. 5

A first communication device converts a first signal into a time-frequency domain to obtain a second signal

600

The first communication device performs windowing on the second signal in the time-frequency domain

610

FIG. 6

OTFS modulation

Modulated signal → Delay-Doppler domain data signal mapping → Delay-Doppler domain pilot signal mapping → Signal in a delay-Doppler domain → Signal in a time-frequency domain → ISFFT → Windowing in the time-frequency domain → Heisenberg transform → Signal in time domain →

FIG. 7

OTFS demodulation

Demodulated signal ← Delay-Doppler domain signal detection ← Signal in a delay-Doppler domain ← SFFT ← Signal in a time-frequency domain ← Windowing in the time-frequency domain ← Wigner transform ← Signal received in time domain

Delay-Doppler domain channel estimation

FIG. 8

Data

Pilot

Pilot guard interval

Special blank left
for windowing

c

Doppler

Delay

FIG. 9

Data

Pilot

Pilot guard interval

Special blank left
for windowing

d

Doppler

Delay

FIG. 10

FIG. 11

FIG. 12

FIG. 13

FIG. 14

FIG. 15

EP 4 404 490 A1

1600

Signal transmission apparatus

1610

First receiving module

FIG. 16

1700

Communication device

1701   Processor ⟺ Memory   1702

FIG. 17

1800

1801 Radio frequency unit

Network module 1802

1810

Memory

1809 Application program

Operating system

Audio output unit 1803

1804

Input unit

Graphics processing unit 18041

Microphone 18042

1808 Interface unit

1807 User input unit

1807 Touch panel

18072 Another input device

1806

Display unit 18061

Display panel

Sensor 1805

Processor

FIG. 18

46

FIG. 19

## INTERNATIONAL SEARCH REPORT

International application No.

**PCT/CN2022/117756**

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT; CNKI; VEN; ENTXT; 3GPP: 延迟, 延时, 多普勒, 加窗, 时域, 频域, 解调, 参考信号, 导频, 种类, 测量, OTFS, delay, doppler, windowing, time, frequency, domain, demodulation, reference, signal, pilot, type, measurement

### C. DOCUMENTS CONSIDERED TO BE RELEVANT

| Category* | Citation of document, with indication, where appropriate, of the relevant passages | Relevant to claim No. |
|---|---|---|
| X | CN 112202479 A (BEIJING UNIVERSITY OF POSTS AND TELECOMMUNICATIONS) 08 January 2021 (2021-01-08) description, paragraphs [0007]-[0013] | 1, 10-12, 25-28, 32, 34, 36, 45-47, 49-54 |
| X | CN 110677361 A (BEIJING UNIVERSITY OF POSTS AND TELECOMMUNICATIONS) 10 January 2020 (2020-01-10) description, paragraphs [0034]-[0056] | 1, 10-12, 25-28, 32, 34, 36, 45-47, 49-54 |
| X | CN 110677359 A (BEIJING UNIVERSITY OF POSTS AND TELECOMMUNICATIONS) 10 January 2020 (2020-01-10) description, paragraphs [0041]-[0059] | 1, 10-12, 25-28, 32, 34, 36, 45-47, 49-54 |
| A | WO 2017087706 A1 (COHERE TECHNOLOGIES INC.) 26 May 2017 (2017-05-26) entire document | 1-54 |
| A | WO 2017173160 A1 (COHERE TECHNOLOGIES INC.) 05 October 2017 (2017-10-05) entire document | 1-54 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 November 2022** | **24 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117756**

| Patent document cited in search report | | | Publication date (day/month/year) | Patent family member(s) | | | Publication date (day/month/year) |
|---|---|---|---|---|---|---|---|
| CN | 112202479 | A | 08 January 2021 | None | | | |
| CN | 110677361 | A | 10 January 2020 | None | | | |
| CN | 110677359 | A | 10 January 2020 | None | | | |
| WO | 2017087706 | A1 | 26 May 2017 | US | 2022045890 | A1 | 10 February 2022 |
| | | | | EP | 3378187 | A1 | 26 September 2018 |
| | | | | US | 2020259692 | A1 | 13 August 2020 |
| | | | | CN | 108781160 | A | 09 November 2018 |
| WO | 2017173160 | A1 | 05 October 2017 | EP | 3437190 | A1 | 06 February 2019 |
| | | | | US | 2019044682 | A1 | 07 February 2019 |
| | | | | CN | 109845102 | A | 04 June 2019 |
| | | | | US | 2021036823 | A1 | 04 February 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202111071208